(19) **Europäisches Patentamt / European Patent Office / Office européen des brevets**

(11) **EP 4 091 014 B1**

(12) **EUROPEAN PATENT SPECIFICATION**

(45) Date of publication and mention
of the grant of the patent:
**28.05.2025 Bulletin 2025/22**

(21) Application number: **21700590.9**

(22) Date of filing: **15.01.2021**

(51) International Patent Classification (IPC):
**G02B 27/01** (2006.01)

(52) Cooperative Patent Classification (CPC):
**G02B 27/0172; G02B 5/1809; G02B 2027/0112;
G02B 2027/0123; G02B 2027/0178**

(86) International application number:
**PCT/EP2021/050859**

(87) International publication number:
**WO 2021/144452 (22.07.2021 Gazette 2021/29)**

(54) **EYEWEAR APPARATUS FOR WIDE FIELD OF VIEW DISPLAY**

BRILLE FÜR ANZEIGE MIT BREITEM SICHTFELD

APPAREIL DE LUNETTERIE POUR AFFICHAGE À LARGE CHAMP DE VISION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.01.2020 EP 20152557**

(43) Date of publication of application:
**23.11.2022 Bulletin 2022/47**

(73) Proprietor: **InterDigital CE Patent Holdings
75017 Paris (FR)**

(72) Inventors:
- **DRAZIC, Valter
  35576 Cesson-Sévigné (FR)**
- **BLONDE, Laurent
  35576 Cesson-Sévigné (FR)**
- **SHRAMKOVA, Oksana
  35576 Cesson-Sévigné (FR)**

(74) Representative: **AWA Sweden AB
Box 5117
200 71 Malmö (SE)**

(56) References cited:
**WO-A1-2019/122496    US-A1- 2009 141 501
US-B1- 9 733 475**

**Description**

**CROSS-REFERENCE TO RELATED APPLICATIONS**

The present application claims priority of EP 20152557, entitled "Eyewear apparatus for wide field of view display," filed January 17, 2020.

**BACKGROUND**

The present disclosure relates to the field of optics and photonics. It may find applications in the field of conformable and wearable optics (i.e. ARNR glasses (Augmented RealityNirtual Reality)), and more particularly in the field of see-through augmented reality glasses with a monocular or binocular system.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

ARNR glasses are considered as a next generation human-machine interface. Development of ARNR glasses (and more generally eyewear electronic devices or Head Mounted Devices also called HMD) is associated with a number of challenges, including reduction of size and weight of such devices as well as improvement of the image quality (in terms of contrast, field of view, color depth, etc.) that should be realistic enough to enable a truly immersive user experience.

The tradeoff between the image quality and physical size of the optical components motivates research into ultra-compact optical components that can be used as building blocks for more complex optical systems, such as ARNR glasses.

In such ARNR glasses, various types of refractive and diffractive lenses and beam-forming components are used to guide the light from a micro-display or a projector towards the human eye, allowing forming a virtual image that is superimposed with an image of the physical world seen with a naked eye (in case of AR glasses) or captured by a camera (in case of VR glasses).

However, aspect ratios of displays and the field of view (FoV) provided by the optical system of the AR/VR glasses do not necessarily match. In general, a very wide FoV is desirable, but as the FoV provided by an optical system is wider in aspect ratio than that of the display, the display is set in the center of the field of view and the HMD has a display area in the field of view that is smaller than the FoV. Thus, the limitation of the display area is imposed by the display's aspect ratio and not by the optics of the optical system, and the field of view provided by the optical system is not fully used. Examples of prior art may be found in US2009/0141501 relating to an image display apparatus and in US9733475 relating to a curved waveguide combiner for head-mounted and helmet-mounted displays, a collimated virtual window or a head up display.

**SUMMARY**

An apparatus according to some embodiments, includes at least one waveguide having an in-coupler, at least a first display configured to generate a first image, and a lens system having an optical axis, the lens system being configured to direct at least the first image onto the in-coupler, wherein the first display is offset toward a first side of the optical axis of the lens system.

In some embodiments, the apparatus further includes a second display configured to generate a second image, wherein the second display is offset toward a second side of the optical axis. In some embodiments, the first display and the second display are be arranged on opposite sides of the optical axis.

According to the invention, the in-coupler is configured to couple the first image into the waveguide using a positive diffractive order and to couple the second image into the waveguide using a negative diffractive order. In some embodiments, the in-coupler may be configured to couple the first image and second image into the waveguide using diffractive orders having absolute values higher than one.

In some embodiments, the optical axis does not intersect any display of the apparatus.

In some embodiments, the waveguide further comprises an out-coupler and at least one eye pupil expander along at least a first optical path from the in-coupler to the out-coupler.

In some embodiments, the waveguide further comprises an out-coupler and a first and a second eye pupil expander along a first optical path from the in-coupler to the out-coupler, the first and second eye pupil expanders being configured to guide the first image to the out-coupler.

In some embodiments, the waveguide further comprises an out-coupler and a third and a fourth eye pupil expander along a first optical path from the in-coupler to the out-coupler.

A method according to some embodiments comprises generating at least a first image on a first display, and using a lens system having an optical axis, directing at least the first image onto an in-coupler of a waveguide, wherein the first display is offset toward a first side of the optical axis of the lens system.

In some embodiments, the method further includes generating at least a second image on a second display and, using the lens system, directing the second image onto the in-coupler of the waveguide, where the second display is offset toward a second side of the optical axis. In some embodiments, the first display and the second display are arranged on opposite sides of the optical axis.

The invention further includes , using the in-coupler, coupling the first image into the waveguide using a positive diffractive order and coupling the second image into the waveguide using a negative diffractive order.

In some embodiments, the in-coupler is configured to couple the first image and second image into the waveguide using diffractive orders having absolute values higher than one.

According to one aspect of the disclosure, an eyewear apparatus is disclosed, which comprises:

- at least one light display engine configured to generate at least one first image on a first display of said light display engine,
- a waveguide configured for guiding light from the light display engine towards an eye of a user to make said first image visible to the user,

wherein said first display is shifted on one side with respect to an optical axis of said light display engine such that said first image is visible to the user on a corresponding side of a field of view of said eyewear apparatus.

According to the present disclosure, the eyewear apparatus is configured for displaying an image at the periphery of the field of view of a user wearing the eyewear apparatus. Usually, the display of a light display engine is centered on the optical axis of the light display engine. According to the present disclosure, the display of the light display engine is shifted from the optical axis of the light display engine, i.e. the optical axis of the projection lens of the light display engine. In this way, the image is no more displayed on the center of the field of view of the apparatus, but the image is displayed on a side of the field of view of the apparatus, thus on a side of the field of view of the user, leaving the central part of the field of view void of images. With this arrangement, the user can see the real world through the eyewear apparatus. Virtual information can thus be displayed to the user on at least one side of his field of view without disturbing the central part of his field of view. Virtual information is displayed on at least one side of the human visual field of view without superimposing virtual and real images in the center of the FoV. This aspect finds application in:

- Glasses for drivers (of planes, cars, bikes...) with information provided to complement the driver with directions, translations, various vehicle information like speed, target distance, available fuel and much more.

Informative glasses allowing walking (e.g. in a city, shop or museum), running, or biking without disturbance in the central field of view.

- Glasses for subtitling movies or plays in theatres.

According to an embodiment of the present disclosure, a first range of polar angles of light beams associated with said first image and incident on said waveguide is outside a cone of polar angles around a normal incidence of said light on said waveguide, said waveguide being configured for guiding said first range of polar angles. According to this embodiment, the waveguide is preferably configured for guiding off-axis angles of light beams. As the first display is shifted with respect to the optical axis, light beams of the image projected to the user are off-axis. In other words, the light beams of interest are not in a cone around the optical axis of the projection lens but in a cone of polar angles that is off-axis with respect to the optical axis of the projection lens. Thus, according to this embodiment, the waveguide is configured for guiding such range of off-axis polar angles.

According to another embodiment of the present disclosure, a refractive index of said waveguide is above 1.5. The FoV of a waveguide depends on the material of the waveguide and more particularly on the refractive index of the waveguide. Therefore, using a higher refractive index allows to increase the field of view of the waveguide, thus allowing to pack at least one display on one side of the FoV of the optical system and leave a wider central display area without virtual information.

According to another embodiment of the present disclosure, the waveguide comprises an in-coupler configured for coupling said first range of polar angles of incident light, wherein said in-coupler comprises a diffraction grating having a grating pitch determined for a grazing incident angle corresponding to an extremal angle value of said first range of polar angles of incident light. According to this embodiment, the grating pitch of the in-coupler is determined for the specific range of polar angles that need to be coupled into the waveguide. As there are no light rays hitting the in-coupler in the cone of polar angles around the normal incidence, the in-coupler diffraction grating can be designed for higher grazing incident angles, thus providing more freedom for the pitch size of the in-coupler.

According to another embodiment of the present disclosure, the light display engine having a second display, said light display engine being configured to generate a second image on said second display, wherein said second display and said first display are symmetrically shifted with respect to said optical axis of said light display engine, such that said second image is visible to the user on another side of the field of view of the eyewear apparatus. According to this embodiment, the light display engine comprises two displays which are disposed side by side, but not adjacent. They are symmetrically disposed on each side of the optical axis of the light engine. In this way, virtual information can be displayed on both sides of the field of view of the user, the central part of the FoV being left void of images.

According to another embodiment of the present disclosure, the eyewear apparatus comprises a second light display engine configured to generate at least one second image on a display of said other light display engine, wherein said second light display engine and said light display engine are set side by side, such that said second image is visible to the user on another side of the field of view of the eyewear apparatus. According to this alternative, another light display engine is used for displaying the second image in the field of the user. The two light display engines are placed side by side such that light beams generated by the two light engines are guided by the waveguide. The two light display engines are configured such that their optical axes are parallel.

According to another embodiment of the present disclosure, a second range of polar angles of light beams associated with said second image and incident on said waveguide is outside said cone of polar angles around the normal incidence of said light on said waveguide, said waveguide being configured for guiding said second range of polar angles.

According to another embodiment of the present disclosure, the first range of polar angles and said second range of polar angles are symmetrical with respect to the normal incidence of said light, and wherein said in-coupler is also configured for coupling said second range of polar angles of incident light beams. According to this embodiment, the waveguide is configured to guide specific angular ranges of incoming light which correspond to the specific positions of the displays. According to the present disclosure, the angular ranges of light to couple correspond to off-axis angular ranges. Since there is no image to display in the central part of the field of view of the user, it is not necessary to couple a cone of angular ranges of light which span around the incident axis of the light incident on the waveguide. Advantageously, the same in-coupler is configured for coupling both off-axis angular ranges of the incident light.

According to the invention, the in-coupler is configured to diffract said first image into a positive diffraction order and to diffract said second image into a negative diffraction order. According to this embodiment, the in-coupler works in a dual mode wherein positive and negative diffraction orders are used such that the first image is sent on one side and the second image is sent on another side of the waveguide.

According to another embodiment of the present disclosure, the in-coupler is configured to diffract said first image and said second image into a diffraction order having an absolute value higher than one. According to this embodiment, using a diffraction order of 2 or above allows to use bigger pitch sizes for the in-coupler which is thus easier to manufacture.

According to another embodiment of the present disclosure, the waveguide comprises at least one diffraction grating configured for deviating the first image by a deviation angle wherein the grating pitch of the at least one diffraction grating is determined as a function of the deviation angle such that a maximum range of angles of the first image is deviated. According to this embodiment, the waveguide comprises a diffraction grating that is specifically configured for allowing to deviate a maximum range of angles of the light beams of the image coupled in TIR (for Total Internal Reflection) mode in the waveguide. In other words, this embodiment allows to transmit the image though the waveguide without being cropped by angles diffracted out of the TIR mode.

According to another embodiment of the present disclosure, the grating pitch $\Lambda_e$ is determined as follows:

○ if $\frac{1}{2}\left(\cos^{-1}\left(\frac{N}{\sqrt{2}}\right) + 45°\right) < \phi_K \leq 90°$, $\Lambda_e = \frac{M \times \lambda}{2 \times \cos\left(\phi_K - \Delta\phi/2\right)}$ , where $\phi_K$ is half of the deviation angle,

$N = \frac{1/n_2}{\sin\theta_d^g}$ where $n_2$ is the refractive index of the material of the waveguide, $\theta_d^g$ is a maximum grazing incident angle inside the waveguide, M is the diffraction order, $\lambda$ is the wavelength of the light coupled into the waveguide, and

$\Delta\phi$ is the maximum angle of the deviated light given by: $\Delta\phi = 2 \times \cos^{-1}\left(\sqrt{\frac{(N+1)^2 \times (\tan\phi_K)^2}{(1-N)^2 + (N+1)^2 \times (\tan\phi_K)^2}}\right)$,

○ if $\frac{1}{2}\left(\cos^{-1}\left(\frac{N}{2 \times \sin\tan^{-1}N}\right) + \tan^{-1}N\right) < \phi_K \leq \frac{1}{2}\left(\cos^{-1}\left(\frac{N}{\sqrt{2}}\right) + 45°\right)$ , $\Lambda_e =$

$M \times \lambda \times \sin(\phi_K - \Delta\phi/2)$ , and $\Delta\phi = \sin^{-1}(\sin(2 \times \phi_K) - N)$,

◦ if $\frac{1}{2}\left(\cos^{-1}\left(\frac{N+2-N^2}{2\times\sqrt{N+1}}\right) + \sin^{-1}\sqrt{\frac{3-N}{4}}\right) < \phi_K \leq \frac{1}{2}\left(\cos^{-1}\left(\frac{N}{2\times\sin\tan^{-1}N}\right) + \tan^{-1}N\right)$,

$\Lambda_e = \frac{N\times M\times\lambda}{2\times\cos\left(\phi_K - \Delta\phi/2\right)}$ , and $\Delta\phi = 2\times\tan^{-1}\left[\frac{\cos\phi_K - \sqrt{\Delta}}{2\times(\alpha+\sin\phi_K)}\right]$ , with $\alpha = \frac{1-N^2}{8\times\sin\phi_K}$ and $\Delta = (\cos\phi_K)^2 - 4\times\alpha\times(\alpha+\sin\phi_K)$,

◦ if $\phi_K \leq \frac{1}{2}\left(\cos^{-1}\left(\frac{N+2-N^2}{2\times\sqrt{N+1}}\right) + \sin^{-1}\sqrt{\frac{3-N}{4}}\right)$ , $\Lambda_e = \frac{N\times M\times\lambda}{\cos\left(\phi_K - \Delta\phi/2\right) + \sqrt{N^2 - (\sin(\phi_K - \Delta\phi/2))^2}}$ , and

$\Delta\phi = 2\times\cos^{-1}\left[\frac{\sqrt{1+\cos(2\times\phi_K)}}{\sqrt{2}\times\cos(2\times\phi_K)}\right]$.

According to another embodiment of the present disclosure, the at least one diffraction grating is comprised in a first exit pupil expander comprised in said waveguide and configured to expand the image into one direction and to deviate the image toward a second exit pupil expander comprised in said waveguide.

According to another embodiment of the present disclosure, the second exit pupil expander is configured to expand the image into another direction and to deviate the image toward an out-coupler.

According to another embodiment of the present disclosure, the eyewear apparatus according to any one of the embodiments cited above comprises one waveguide configured for each one of a Red, Green and Blue color. According to this embodiment, the eyewear apparatus comprises three waveguides for each eye, when the system is an RGB system.

According to a second aspect of the present disclosure, a waveguide is disclosed, which comprises a diffraction grating configured for deviating light beams coupled into said waveguide in Total Internal Reflection, TIR, mode, by a deviation angle, wherein a grating pitch of the diffraction grating is determined as a function of the deviation angle such that a maximum range of angles of light beams remains in TIR mode in said waveguide after being deviated. According to this aspect of the disclosure, a diffraction grating is proposed which is specifically configured for allowing to deviate a maximum range of angles of the light beams of an image coupled in TIR mode in the waveguide. In other words, this aspect of the disclosure allows to transmit the image though the waveguide without being cropped by angles diffracted out of the TIR mode.

According to an embodiment of this aspect, the grating pitch $\Lambda_e$ is determined as follows:

◦ if $\frac{1}{2}\left(\cos^{-1}\left(\frac{N}{\sqrt{2}}\right) + 45°\right) < \phi_K \leq 90°$, $\Lambda_e = \frac{M\times\lambda}{2\times\cos\left(\phi_K - \Delta\phi/2\right)}$ , where $\phi_K$ is half of the deviation angle,

$N = \frac{1/n_2}{\sin\theta_d^g}$ where $n_2$ is the refractive index of the material of the waveguide, $\theta_d^g$ is a maximum grazing incident angle inside the waveguide, M is the diffraction order, $\lambda$ is the wavelength of the light coupled into the waveguide, and

$\Delta\phi$ is the maximum angle of the deviated light given by: $\Delta\phi = 2\times\cos^{-1}\left(\sqrt{\frac{(N+1)^2\times(\tan\phi_K)^2}{(1-N)^2 + (N+1)^2\times(\tan\phi_K)^2}}\right)$,

◦ if $\frac{1}{2}\left(\cos^{-1}\left(\frac{N}{2\times\sin\tan^{-1}N}\right) + \tan^{-1}N\right) < \phi_K \leq \frac{1}{2}\left(\cos^{-1}\left(\frac{N}{\sqrt{2}}\right) + 45°\right)$, $\Lambda_e = M\times\lambda\times\sin(\phi_K - \Delta\phi/2)$ , and $\Delta\phi = \sin^{-1}(\sin(2\times\phi_K) - N)$,

◦ if $\frac{1}{2}\left(\cos^{-1}\left(\frac{N+2-N^2}{2\times\sqrt{N+1}}\right) + \sin^{-1}\sqrt{\frac{3-N}{4}}\right) < \phi_K \leq \frac{1}{2}\left(\cos^{-1}\left(\frac{N}{2\times\sin\tan^{-1}N}\right) + \tan^{-1}N\right)$,

$\Lambda_e = \frac{N\times M\times\lambda}{2\times\cos\left(\phi_K - \Delta\phi/2\right)}$ , and $\Delta\phi = 2\times\tan^{-1}\left[\frac{\cos\phi_K - \sqrt{\Delta}}{2\times(\alpha+\sin\phi_K)}\right]$ , with $\alpha = \frac{1-N^2}{8\times\sin\phi_K}$ and $\Delta = (\cos\phi_K)^2 - 4\times\alpha\times(\alpha+\sin\phi_K)$,

$$\circ \text{ if } \phi_K \leq \frac{1}{2}\left(\cos^{-1}\left(\frac{N+2-N^2}{2\times\sqrt{N+1}}\right) + \sin^{-1}\sqrt{\frac{3-N}{4}}\right), \Lambda_e = \frac{N\times M\times\lambda}{\cos\left(\phi_K-\Delta\phi/2\right)+\sqrt{N^2-(\sin(\phi_K-\Delta\phi/2))^2}}, \text{ and}$$

$$\Delta\phi = 2\times\cos^{-1}\left[\frac{\sqrt{1+\cos(2\times\phi_K)}}{\sqrt{2}\times\cos(2\times\phi_K)}\right].$$

According to another embodiment, the diffraction grating is an exit pupil expander comprised in said waveguide and configured to expand the light beam into one direction and to deviate the light beam toward another exit pupil expander comprised in said waveguide or an out-coupler of said waveguide.

According to an embodiment of the second aspect, an eyewear apparatus is disclosed, which comprises:

- a light engine configured to generate an image on a grid's display of said light engine,
- a waveguide according to any one of embodiments cited above, said waveguide being configured for guiding light from the light engine towards an eye of a user to make said image visible to the user.

According to third aspect of the present disclosure, an eyewear apparatus is disclosed which comprises features according to any one or any combination of the embodiments of the first aspect of the disclosure and/or features according to any one or any combination of the embodiments according to second aspect.

## BRIEF DESCRIPTION OF THE DRAWINGS

The present disclosure can be better understood with reference to the following description and drawings, given by way of example and not limiting the scope of protection, and in which:

FIG. 1 illustrates an exemplary off-axis illumination system for a DLP (for Digital Light Processing) micro-display,

FIG. 2 illustrates another exemplary off-axis illumination system for a DLP micro-display,

FIG. 3 illustrates an exemplary LCOS (for Liquid Crystal on Silicon) typical illumination system,

FIG. 4 illustrates a principle of time sequential color illumination,

FIG. 5 illustrates an exemplary non-pupil forming optical design,

FIG. 6 illustrates an exemplary pupil forming optical design,

FIG. 7 illustrates an exemplary flat optical system,

FIG. 8 illustrates different displays aspect ratios and FoV of an optical system,

FIG. 9 illustrates an example of two inscribed displays within a spatial acceptance area of an optical system according to an embodiment of the disclosure,

FIG. 10 illustrates variations of the horizontal field of view and vertical field of view as functions of the index $n_2$ of a waveguide,

FIG. 11A illustrates exemplary spatial positions of displays,

FIG. 11B illustrates angles $\Theta_i$, $\varphi_i$ as transformed from pixel positions on displays of FIG. 11A to angles by the lens of an optical system according to an embodiment of the disclosure,

FIG. 11C illustrates the diffracted areas $\Theta_d$, $\varphi_d$ that remain in TIR mode after the diffraction by a folding grating according to an embodiment of the disclosure,

FIG. 11D illustrates diffracted angles $\Theta_e$, $\varphi_e$ that represent a maximal angular extent achieved by an optical device having a folding grating according to an embodiment of the disclosure,

FIG. 12 illustrates an exemplary light engine with two displays,

FIG. 13 illustrates spherical angles ($\Theta_i$, $\varphi_i$) calculated for a normalized lens which is a lens whose components are homogenously scaled in order to have an overall focal length f=1,

FIG. 14 illustrates spot diagrams from the corners of the display in spherical angular coordinates ($\Theta_i$, $\varphi_i$) simulated using an optical design software,

FIG. 15 is a schematic cross-sectional view through a set of two displays, a projection lens system, and a waveguide with an in-coupler region,

FIG. 16 illustrates an exemplary schematic light path within a waveguide according to an embodiment of the disclosure,

FIG. 17 illustrates a definition of critical and grazing incident and diffracted rays,

FIG. 18 illustrates a coordinate system for conical diffraction,

FIG. 19 illustrates incident angles that diffract into a waveguide,

FIG. 20 illustrates diffracted angles in the waveguide in TIR mode,

FIG. 21 illustrates a dual diffraction mode,

FIG. 22 illustrates an acceptance angle as a function of the grating's orientation for the fold grating,

FIG. 23 illustrates grating pitch as a function of grating orientation,

FIG. 24A illustrates another exemplary spatial position of displays,

FIG. 24B illustrates angles $\Theta_i$, $\varphi_i$ as transformed from pixel positions on displays to angles by the lens of an optical system according to an embodiment of the disclosure,

FIG. 24C illustrates the diffracted area $\Theta_d$, $\varphi_d$ that remain in TIR mode after the diffraction by a folding grating according to an embodiment of the disclosure,

FIG. 24D illustrates diffracted angles $\Theta_e$, $\varphi_e$ that represent a maximal angular extent achieved by an optical device having a folding grating according to an embodiment of the disclosure,

FIG. 25 illustrates an exemplary eyewear apparatus according to an embodiment of the disclosure, illustrating an exemplary spatial position of a display with respect to the optical axis of a projection lens of a light engine according to an embodiment of the present disclosure,

FIG. 26 illustrates another exemplary eyewear apparatus according to an embodiment of the disclosure, illustrating exemplary spatial positions of displays with respect to the optical axis of a projection lens of a light engine according to an embodiment of the present disclosure.

## DETAILED DESCRIPTION

Waveguide based optical systems for Augmented Reality (AR) typically use diffraction gratings for in-coupling and pupil-expanding. The Field of View (FoV) is much more limited vertically (VFoV) than horizontally (HFoV) due to the Eye-Pupil-Expanders (EPE). The typical aspect ratio of micro-displays used in AR applications are 4:3, 3:2 and 16:9. Some embodiments of the present disclosure provide optical systems with a broader field of view.

According to an aspect of the present disclosure, an eyewear apparatus is proposed that takes advantage of a broad HFoV by using one or two micro-displays per eye to overlay virtual images on the left or/and right hand sides of the FoV while leaving the central part of the FoV void of any augmented displaying. Such a display may be used in applications where displaying virtual information in the center of the field is not desired.

The field of view of the eyewear apparatus corresponds to the angular field wherein the apparatus renders the image to a user wearing the eyewear apparatus when the user looks through the eyewear apparatus. The horizontal field of view corresponds to the part of the field of view along the horizontal axis, the horizontal axis is perpendicular to the line of sight of the user wearing the eyewear apparatus and has a direction which is parallel to the line joining the centers of the eyeballs.

Different technologies may be used for designing a Head-Mounted Display (HMD) relating to display types, illumination systems, image forming systems, and the like. A brief review of possible technologies for Head-Mounted displays is given below.

## Display types.

Embodiments described herein can use any of the following types of displays, among others: LCOS (Liquid Crystal On Silicon), DLP (Digital Light Projection) and OLED (Organic Light Emitting Diode).

## Illumination systems.

The flat panel micro-display of OLED type is emissive and does not require an illumination system. This simplifies the design and lessens the constrains on the weight. Unfortunately, this comes at a penalty in terms of brightness since the latter is limited by the brightness of the screen itself which is lower than in other systems with an external light-source, but also by the fact that the display has a large geometrical extent making the light collection through the imaging system very lossy.

LCOS or DLP based systems are usually illuminated by one or more LEDs, and in order to get colors in projected image, the light-source provides an RGB illumination in a time sequential manner. The illumination system based on LED light sources is not an optimal one because of the high geometrical extent of LEDs and moreover illumination systems for LCOS micro-display is more difficult since it needs polarization management. One of the aspects of the polarization management is that, in order not to lose one polarization, the system may employ a polarization beam splitter recovery. The polarization recovery at least doubles the geometrical extent, so that, in order for the implementation to be light efficient, a light source is chosen whose native geometrical extent is at least half of that of the imaging optics.

Illumination systems may also use beam forming to remain efficient. In many cases, the light source produces a disk-shaped illumination, whereas the display geometry is rectangular. In order to illuminate the whole display area, the illumination footprint may be bigger than the display, which results in a loss of light. As it is desirable for the illumination to be uniform, the light's footprint may be selected to be several times bigger than the micro-display's area. Components may be used in the illumination in to transform the illumination beam into a uniform rectangular illumination section of the same size than the micro-display. Here, light pipes or fly-eye integrator lenses may be used.

A further difference between LCOS and DLP based systems is that the latter requires off-axis illumination.

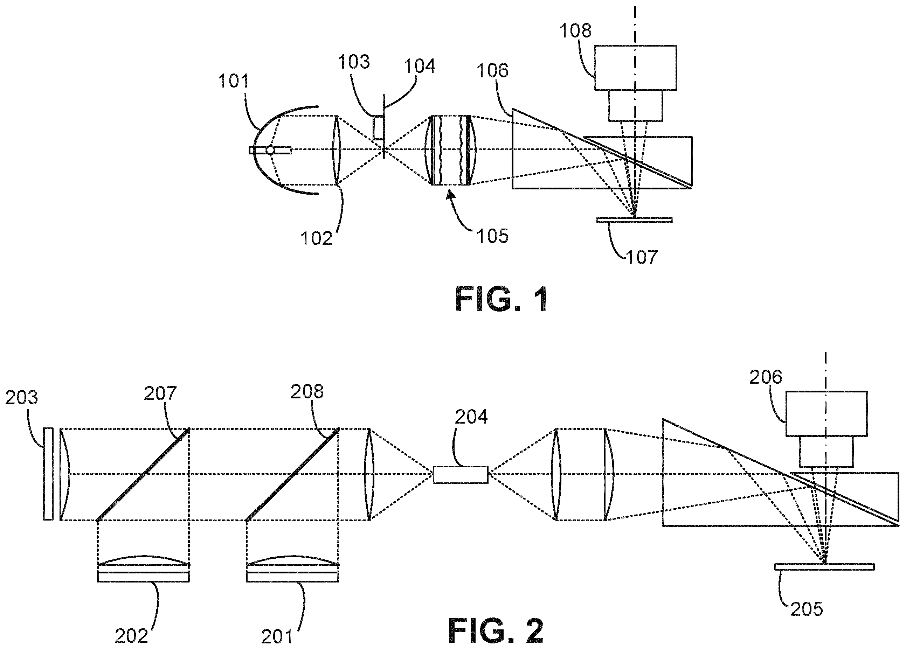

FIG. 1 illustrates an exemplary off-axis illumination system for a DLP micro-display. The display of FIG. 1 includes a high intensity discharge (HID) lamp with a parabolic reflector 101, a converging lens 102, a color wheel motor 103 driving a color wheel 104, an integrator fly-eye lens system 105 to transform the circular beam into a rectangular one, a total internal reflection (TIR) prism 106, a digital micromirror device (DMD) 107, and a projection lens system 108.

FIG. 2 illustrates another exemplary off-axis illumination system for a DLP micro-display. In this example, the illumination includes three LED light sources 201 (for red light), 202 (for green light), and 203 (for blue light), triggered in time sequential mode and directed by dichroic filters 207, 208. An optical integrator 204 transforms the circular beam into a rectangular one. A relay system images the rectangular end of the pipe onto the digital light processor (DLP) An image to be displayed is generated on a Digital Micro-mirror Device (DMD) array 205. Each pixel of the DMD array can be in a state on or off by moving the corresponding micro-mirror. When the pixel is on, light is reflected by the micro-mirror to the projection lens 206. When the pixel is off, light is reflected somewhere else (in a heat sink for instance). Those pixels appear dark in the display area of the smart-glasses as no light rays are transmitted for these pixels.

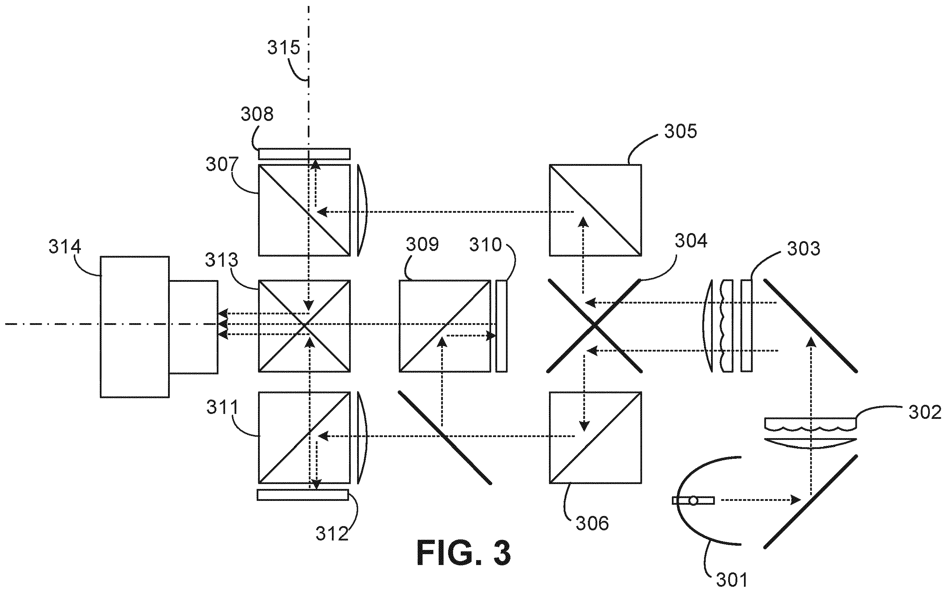

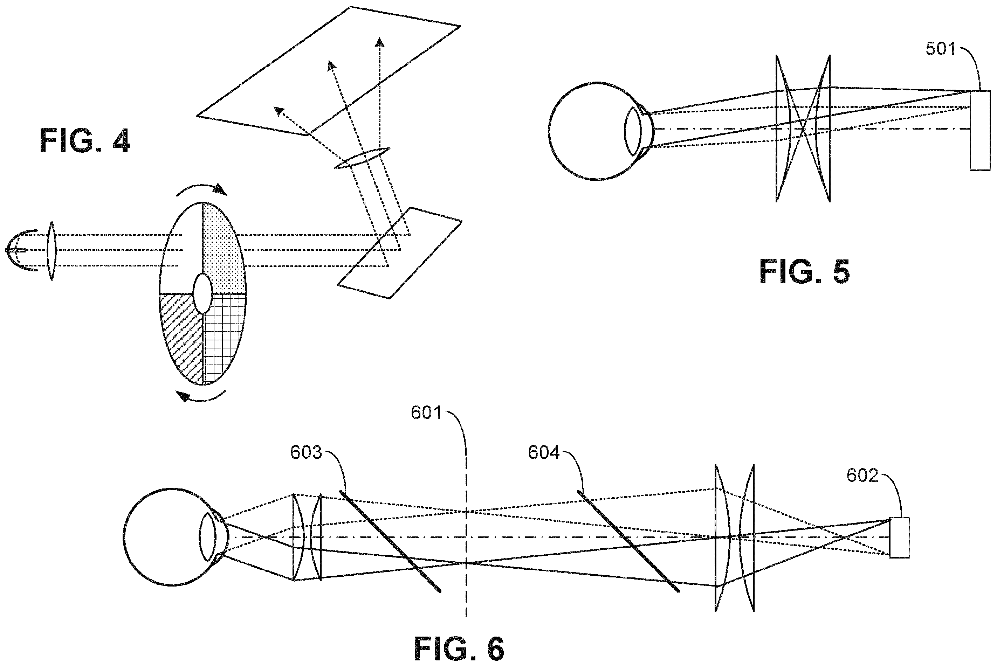

By comparison, the illumination system for a liquid-crystal on silicon (LCOS) display is more complicated due to the polarization management system. FIG. 3 illustrates an exemplary LCOS typical illumination system. There is a beam forming integrator fly-eye system. The example light engine has three LCOS displays. It is different from a time sequential illumination system as illustrated in FIG. 4. An image to be displayed by such a light engine is generated on the LCOS panels (Blue, Green and Red D-ILA). The example of FIG. 4 has one LCOS panel for each RGB color. The display of FIG. 3 includes a lamp 301, which may be an arc lamp. Light from the lamp is integrated using an integrator lens system including integrator lens 302 and is polarized by a polarizer 303. Color splitting filters 304 separate the light into a blue beam that travels to pre-polarizer 305 and a red and green beam that travels to pre-polarizer 306. The blue light travels to a blue color-tuned polarizer 307 and is modulated by a corresponding D-ILA (direct-drive image light amplification) device 308. The green light travels to a green color-tuned polarizer 309 and is modulated by a corresponding D-ILA device 310. The red light travels to a red color-tuned polarizer 311 and is modulated by a corresponding D-ILA device 312. The modulated light is recombined at an X-combiner 313 and provided to a projection lens system 314. In the system of FIG. 3, the mirrors and color-splitting filters provide different optical paths with different optical axes for different colors. For example, the display 308 for blue light is along optical axis 315, which is the optical axis of the lens system 314 as reflected within the X-combiner 313.

FIG. 4 illustrates a principle of time sequential color illumination. The time sequential color illumination system is a device which switches the colors in a sequential manner from R, to G, to B and again to R, with sometimes some white light in order to gain some light efficiency. The switching is either done by triggering a set of three or more LEDs, or by selecting a color channel from a white light source with either a moving or a solid state color switcher.

**Image forming systems.**

Current basic forms of optical designs for HMDs are eyepiece, objective-eyepiece and projection optics. Example eyepiece and objective-eyepiece systems are described below.

The eyepiece design is a non-pupil forming design. An example of such a design is illustrated in FIG. 5. It requires no intermediary image surface conjugate to the micro-display 501. The eye's pupil is the pupil for the HMD. This system is simpler and smaller compared to the pupil-forming design, but it has a shorter throw distance between the image source and the virtual image, putting the whole assembly on the front of the head, close to the eyes.

A second optical approach is a pupil forming design which is a bit more complex. An example of this design is illustrated in FIG. 6. This is more like a compound microscope in which a first set of lenses creates an intermediate image 601 of the display 602. This intermediate image is relayed by a second set of lenses at the location of which a pupil is created. A potential advantage is that the pupil-forming design provides more path length from the image plane to the eye. This gives the designer more freedom to insert mirrors (e.g. 603, 604) as desired to fold the optical axis and thus to move the optical components away from the face to a more advantageous weight and center of gravity location. Some disadvantages are that the additional lenses increase the weight and the cost of the HMD and that outside the exit pupil, there is no imagery.

In each case, it is desirable for the optical design to be able to relay the image with sufficiently small amounts of residual aberrations, with manual focus if desired, and with proper alignment for a binocular system. In addition, the optical design preferably provides a sufficiently large exit pupil (eye-box) so that the user doesn't lose the image if the HMD shifts on the head, as well as at least 25 mm of eye relief to allow the user to wear eyeglasses.

An exemplary optical system according to an embodiment of the disclosure is disclosed below.

The principles disclosed herein generally apply on an optical system which is a kind of mix between non-pupil and pupil forming optical design and based on flat optical components, placed on a glass plate, also called a waveguide.

This optical system has basically the architecture of a non-pupil system, but instead of putting the eye at the exit pupil of the optical system, the pupil is transported through the waveguide by total internal reflection (TIR) and also expanded by various optical components. Total Internal Reflection refers to complete reflection of a light ray within the waveguide from the surrounding surfaces back into the waveguide. TIR mode occurs if the angle of incidence is greater than the critical angle.

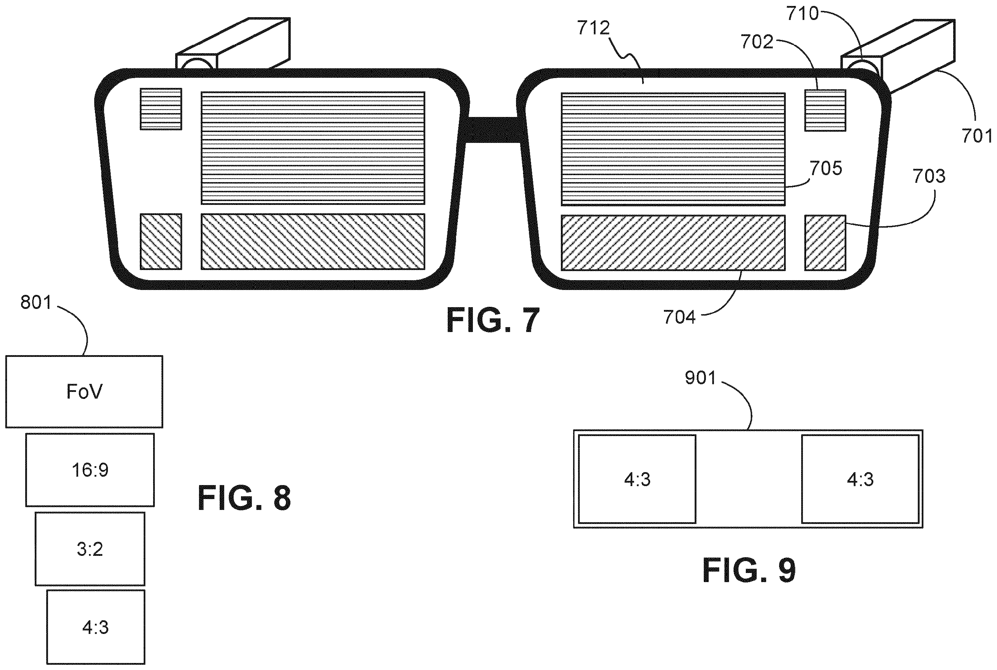

An exemplary system is illustrated in FIG. 7. The eyewear apparatus illustrated in FIG. 7 comprises at least one light display engine 701 configured for emitting at least one image to display. The light engine display is for instance placed on the branches of the eyewear apparatus. The eyewear apparatus also comprises an optical component 710 corresponding to the projection lens of the light engine display. The optical component 710 is arranged for coupling incoming light of the image generated on the display of the light display engine to the waveguide 712. The aim of the waveguide (WG) 712 is to guide incoming light towards an eye of a user to make the image visible to the user.

First, the image beam hits a so called in-coupler 702 of the waveguide, which is a diffraction grating that deviates the beam into the waveguide at Total Internal Reflection (TIR) angles. After the in-coupler, the image is trapped in the glass like in an optical fiber core. Then, the beam propagates downwards on FIG. 7 and hits a second component 703, which is an Eye Pupil Expander (EPE). The EPE has two functions. The first function of the EPE is deviating the image like mirrors do in a pupil forming system. It is for the final goal of mixing the virtual and real images. A second function of the EPE is expanding the pupil in one dimension, in order to permit a comfortable viewing. A second EPE 704 is also provided to expand the pupil into a second direction. Thus, the pupil is expanded in two dimensions. The second EPE 704 also deviates the image beam upwards. The image is finally extracted toward the eye by an out-coupler 705.

An HMD or eyewear apparatus can be further characterized by the number of images provided to the user. The user can see a monocular image on one eye, a bi-ocular image which is the same image presented to each eye, or a binocular image where each eye receives an image with a different parallax in order to form a stereo pair. Further, the image can also be of a light-field form. The number of displays used in the apparatus varies accordingly. The number of displays may be one for one eye, one for both eyes or two displays, or one for each eye.

In classical AR systems based on flat optical components, the field of view is reduced vertically because of fold gratings EPE. In a system using a double diffraction mode, the spatial extent of the display that matches to the angular extent of the field of view is very broad. For instance, for a system with a waveguide of index $n_2=1.5$, a horizontal Field of View HFoV is48.5°, and a vertical Field of View VFoV=23.7°, which corresponds to an angular aspect ratio of 2:1.

Usually, displays have a spatial aspect ratio of 16:9, 3:2 or 4:3. FIG. 8 compares the discussed aspect ratios at a same scale as the extent of a FoV. In FIG. 8, the top rectangle corresponds to a maximal display size that transmits through a system of in-coupler and folder for a waveguide plate with $n_2$=1.5. The three lower rectangles correspond to displays having respectively a spatial aspect ratio of 16:9, 3:2 and 4:3.

The display that best matches the FoV of the system illustrated at the top layer is the display with a 16:9 aspect ratio. It is the aspect ratio that minimally spoils on horizontal field of view. According to one of the principles disclosed herein, an optical system is provided wherein a spatial field could pack, horizontally, one or more displays while keeping the center of the FoV without any displayed information. Such systems may operate to display only virtual information on the periphery and not in the center of the observer's FoV.

An example of such a displayed area is illustrated in FIG. 9. Two displays of 4:3 aspect ratios are shown on each side of a FoV 901. In some embodiments, the displays may extend slightly beyond the field of view on one or more sides to provide a greater utilization of the field of view.

It may not be feasible to insert two displays of 4:3 aspect ratios on each side of the FoV as shown on FIG. 8. The FoV 801 of FIG. 8 is not wide enough for packing two displays side by side with a large gap in between. This calls for a very broad horizontal FoV.

This is also the case even if only one display is shifted at one side of the FoV to let the central part of the FoV void of images. For instance, if it is desired to display virtual information only on one side of the FoV, the FoV 801 of FIG. 8 may not be sufficiently wide. As can be seen in FIG. 8, a 4:3 aspect ratio display still takes more than half of the FoV 801.

The FoV varies with the refractive index of the waveguide. It can be seen that a very different behavior is obtained for the variation of the horizontal and vertical FoV. For that purpose, the variations of HFoV and VFoV for a system with double diffraction modes are compared.

The HFoV equation is:

$$\Delta\Theta^H = 2 \times \sin^{-1}(n_2 \times \sin\theta_d^g - \sin\theta_i^g - 1)$$

While the VFoV equation is:

$$\Delta\Theta^V = \sin^{-1}(\sin(2 \times \phi_K - \frac{1}{n_2 \times \sin\theta_d^g})),$$

Where $\phi_K$ is the orientation of EPE's grating. Usually it is equal to 45°. The variable $n_2$ is the index of refraction of the waveguide. The angles are design parameters for the gratings and their values can be set as:

$$-30° < \theta_i^g < +30°, 50° < \theta_d^g < 90°.$$

Example values are $\theta_i^g = 2°, \theta_d^g = 75°$.

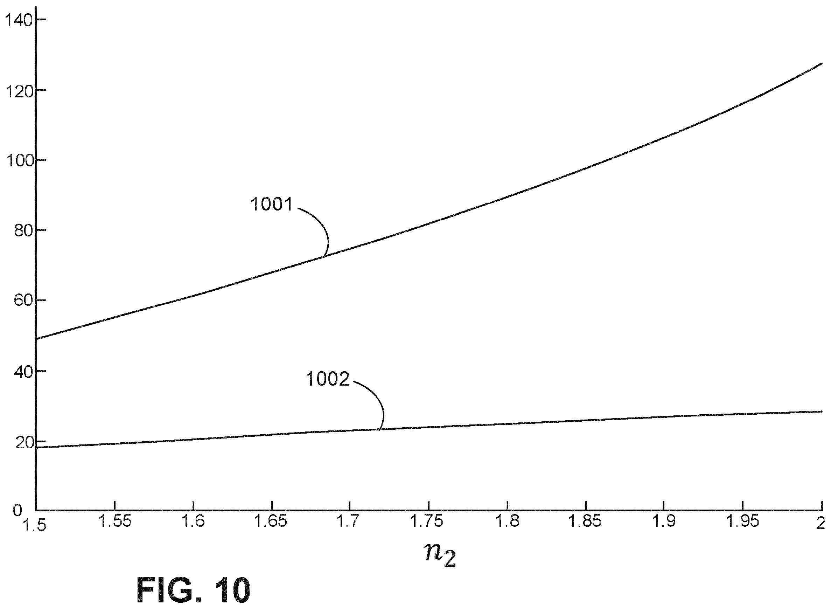

With those equations, FIG. 10 is a graph of the fields of view (in degrees) as a function of $n_2$. The graph shows clearly that the horizontal FoV 1001 grows faster with growing $n_2$ than the vertical FoV 1002.

According to an embodiment of the disclosure, a waveguide is provided which has a refractive index allowing to pack one display at the left-hand or right-hand side of the FoV or to pack two displays: one display at the left-hand side and another one at the right hand side of the FoV and still leave in both cases an unobstructed field in the central part of the visual system.

An exemplary optical system according to the present disclosure may be an eyewear apparatus, such as the one illustrated in FIG. 7. Exemplary parameters are the following: index of refraction of the waveguide is $n_2$ = 1.9, the gratings are designed for $\lambda$=625nm, $\theta_i^g = 2°, \theta_d^g = 75°$, M = ±2, $\Lambda_i$=697.3nm, $\Lambda_e$=652.4nm, where M is the order of diffraction, and $\Lambda_i$ and $\Lambda_e$ are respectively the grating pitches of the in-coupler and the out-coupler.

The total normalized display size that is transmitted through the system is 2.65×0.78 which is indeed a wide aspect ratio of 10:3. Normalized display size means that this is the size a display would have if a projection lens of focal length equal to 1mm is used.

Two 4:3 displays of normalized size 1.04×0.78 can be packed in this area, and the central area where nothing will be displayed in the field of view has dimensions of 0.57×0.78.

For designing the optical system providing the above discussed functionality, the horizontal field of view (HFoV) and field of view (VFoV) may be determined according to the refractive index of the waveguide. A waveguide with a specific refractive index, for instance higher than 1.5, is selected, and the HFoV and VFoV given by the waveguide are determined.

Some embodiments may use one display. Other embodiments may use two displays. The selection of the displays may be performed according to the aspect ratio that is to be rendered. In some embodiments, two displays of 4:3 aspect ratios are used, but other aspect ratios are used in other embodiments. The displays may be arranged to provide for an efficient use of the horizontal field of view. For example, the displays may be placed at a spatial position with respect to the optical axis of the projection lens, such that the light beams incident on the in-coupler are output from the optical system at the periphery of the HFoV.

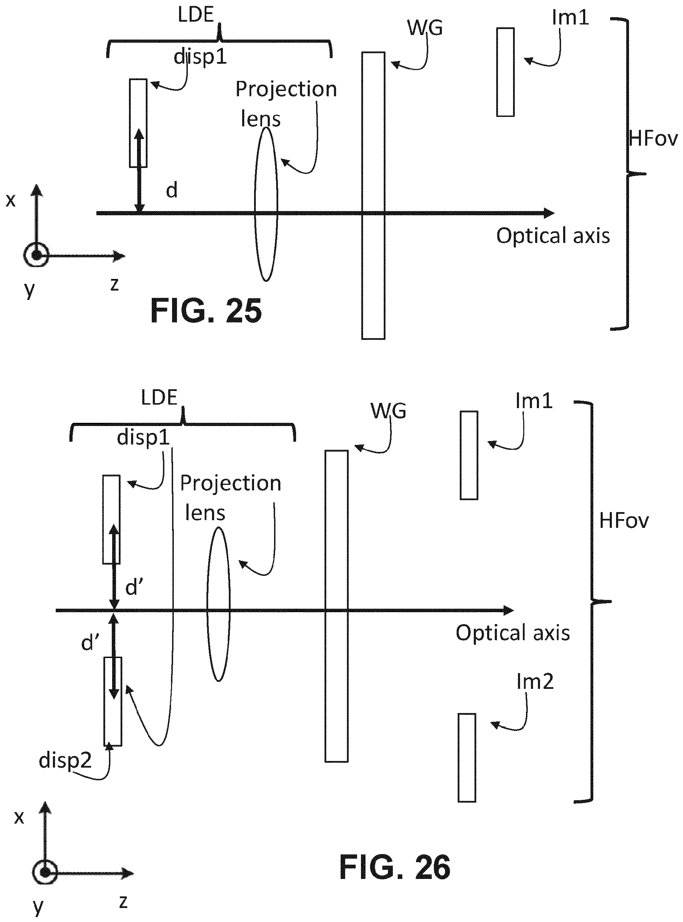

In some embodiments, as illustrated in FIG. 25, the display disp1 is shifted on one side of the optical axis of the projection lens of the light display engine LDE with a distance d, d being the distance between the optical axis of the projection lens and the center of the display disp1. The optical axis of the projection lens is along the z axis of the orthonormal coordinate system. The display disp1 is shifted by the distance d in the xz-plane which generally corresponds to the horizontal plane of the eyewear apparatus.

The light beams of an image generated on the display disp1 of the light engine LDE are coupled into the waveguide WG and guided by the waveguide WG towards an eye of a user to make the image Im1 visible to the user on one side of the horizontal field of view HFoV of the system schematically illustrated on FIG. 25.

In the embodiment of FIG. 26, two displays disp1 and disp2 of the light display engine LDE are illustrated. Each of the displays is shifted on a side of the optical axis of the projection lens, symmetrically, with a same distance d' corresponding to the distance between the optical axis and the center of the displays. In a similar manner as for FIG. 25, the optical axis of the projection lens is along the z axis of the orthonormal coordinate system. The displays disp1 and disp2 are shifted by the distance d' in the xz-plane which generally corresponds to the horizontal plane of the eyewear apparatus.

In some embodiments, the distance d' may be selected as follows: $d' = \tan(\frac{w_{tot}}{2} - \frac{w_{disp}}{2})$, where $w_{tot}$ is the width of the total normalized display size that is transmitted through the system and $w_{disp}$ is the width of a display packed on one side of the system. For instance, using the values given above, d'=tan(2.65/2 - 1.04/2). The light of the images generated on each one the displays disp1 and disp2 of the light engine LDE is coupled into the waveguide WG and guided by the waveguide WG towards an eye of a user to make the images Im1 and Im2 visible to the user respectively on each side of the horizontal field of view HFoV of the system schematically illustrated in FIG. 26.

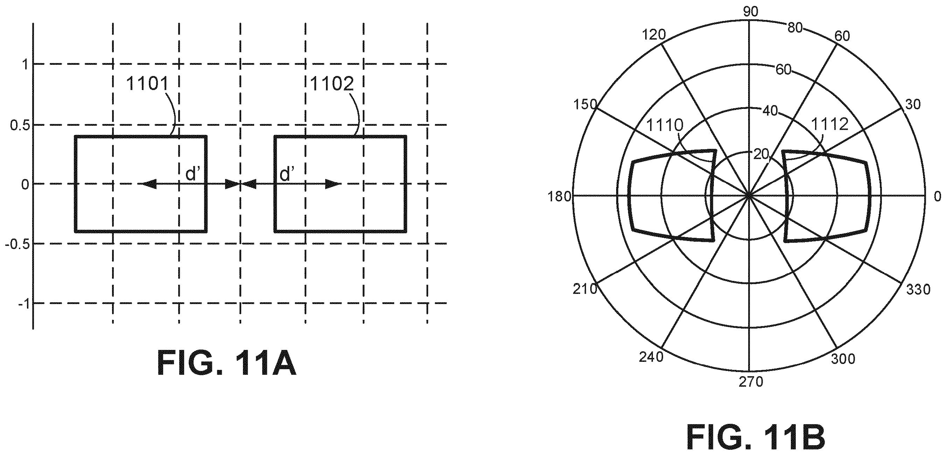

FIG. 11A illustrates an exemplary spatial positioning of two displays of a light engine. Here, the displays 1101, 1102 are represented such that the optical axis of the projection lens is perpendicular to the image plane of the displays.

It can be seen that the two displays are placed in a disjointed manner, leaving a central space between the displays. Each display is shifted by a distance d' from the optical axis of the projection lens along the horizontal direction and centered on the optical axis of the projection lens along the vertical direction.

FIG. 11B shows the angles $(\Theta_i, \varphi_i)$ as transformed from pixel positions on displays to angles by the lens of the optical system. FIG. 11B represents input angles before the in-coupler, that are coupled into the waveguide. It can be seen that there is a missing region between the edges 1110 and 1112, within which there is no information injected to the waveguide. Only angles that are between the closed areas are present at the in-coupler and diffract in TIR mode and are thus transported to the eye.

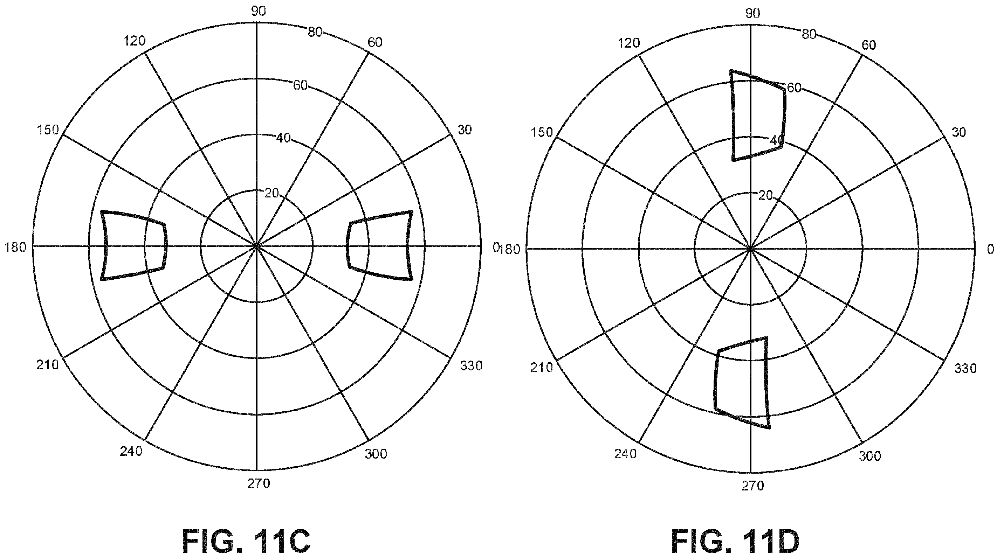

FIG. 11C illustrates the diffracted area $(\Theta_d, \varphi_d)$ that remains in TIR mode after the diffraction by the first EPE folding grating of the optical system. FIG. 11D illustrates the diffracted angles $(\Theta_e, \varphi_e)$ at output of the first EPE that represent a maximal angular extent achieved in the optical device with the parameters described above.

In some embodiments, where the width in the central part is relatively narrow, the left-hand side display may have its right side cropped by just displaying a black band whereas the right hand side display may have its left border provided by a black displayed stripe in order to give a bigger area to the central part of the FoV where nothing is shown. This may be done, for example by cropping the right side or left side of the images generated on the displays of the light engine and setting these part of the images as black pixels.

The field of view of the example given above is: Horizontal=105.9°, Vertical=42.6°, Diagonal=108.2°.

Due to the absence of rays hitting the in-coupler for a cone of polar angles around the normal incidence (on FIG. 11B, it can be seen that every polar incident angle between edges 1110 and 1112 is missing), according to an embodiment of the disclosure, the in-coupler may be configured to get a higher angle than $\theta_i^g = 2°$, at grazing incidence in the waveguide. For that purpose, for instance $\theta_i^g =$ -15°, in the equation:

$$\Lambda_i = \frac{M \times \lambda}{n_2 \times \sin \Theta_d^g - \sin \Theta_i^g} \approx 596.9 nm$$

Other values for $\theta_i^g$ may also be used in other embodiments. This angle may be below the angle on the diagram of FIG. 11B where the edges 1110, 1112 cross the horizontal axis.

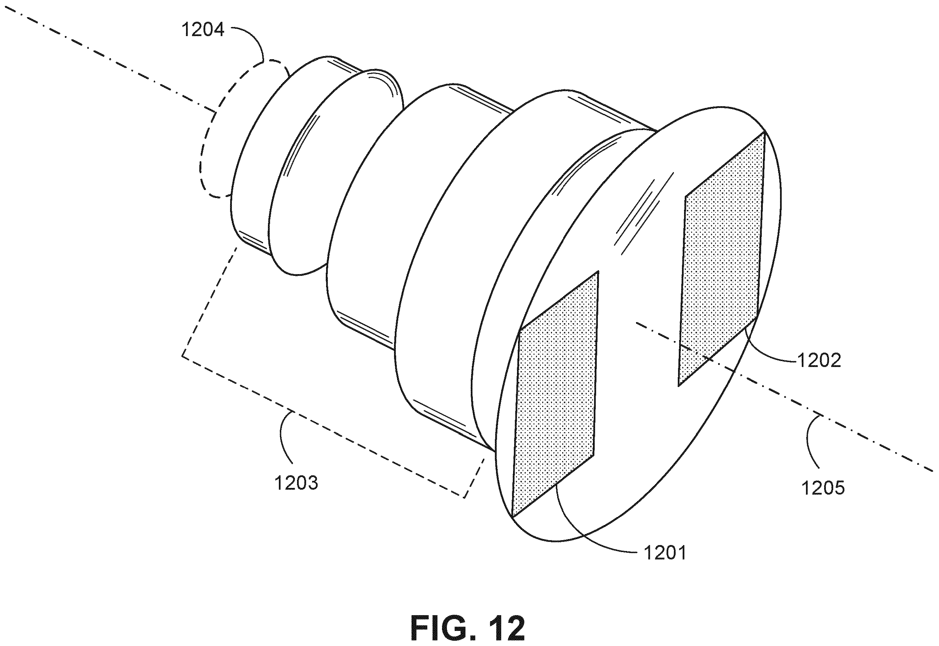

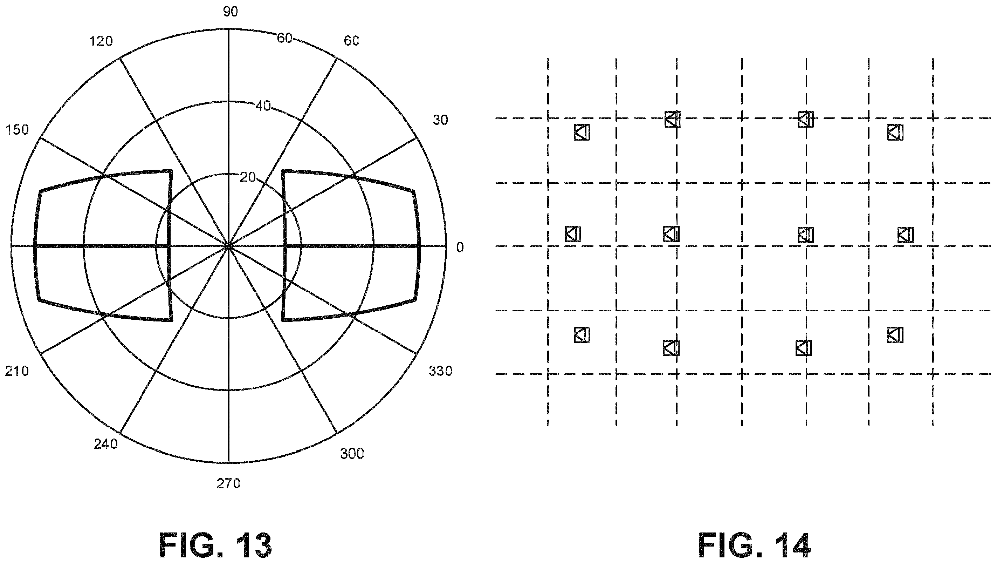

FIG. 12 is a schematic perspective view of a display system and projection lens system according to some embodiments. Displays 1201 and 1202 are spaced apart from one another on opposite sides of the optical axis 1205, but both supply light to the same projection lens system 1203. In this example, no display intersects the optical axis 1205. The in-coupling grating is intended to be placed at the exit pupil location (illustrated approximately at 1204). At the exit pupil location, the optical design software can calculate the spot diagram in spherical coordinates and its overall form is compared with the one calculated for a lens with a normalized focal length. The sizes and aspect ratio are not identical because it is very difficult to design a lens that accommodates a horizontal FoV above 100 degrees, but at least this allows a visual comparison, and this is what is compared with FIGs. 13 and 14 where FIG. 13 illustrates spherical angles ($\Theta_i$, $\varphi_i$) calculated for a normalized lens, and FIG. 14 illustrates spherical angles ($\Theta_i$, $\varphi_i$) simulated with optical design software.

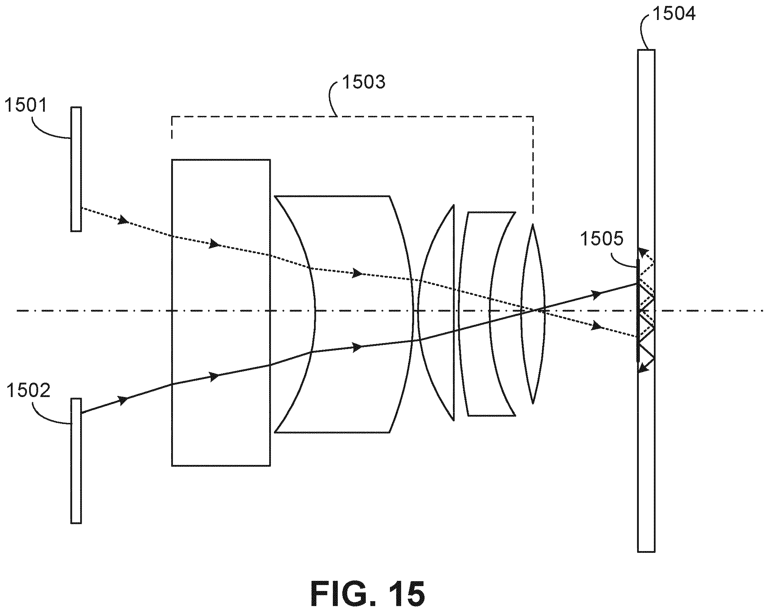

FIG. 15 is a schematic cross-sectional view through a set of two displays 1501, 1502, a projection lens system 1503, and a waveguide 1504 with an in-coupler region 1505. FIG. 15 illustrates the passage of example light rays from the displays 1501 and 1502. According to an embodiment, light from the upper (as shown on the page) display 1501, once coupled into the waveguide, travels in an upward direction, and light from the lower display 1502, once coupled into the waveguide, travels in a downward direction. The cross-section of FIG. 15 may represent a horizontal slice through a display system, with display 1501, for example, being on the left side and display 1502 being on the right side.

Embodiments providing a complete AR headset with both eyes equipped for augmented reality may have for each eye such a lens and two displays in case virtual information is displayed on both sides of the HVoF, which is for the headset a total of two projection lenses, four displays and two waveguides.

In the case where virtual information is displayed only on one side of the HFoV, a complete AR headset with both eyes equipped for augmented reality may have for each eye such a lens and one display, which is for the headset a total of two projection lenses, two displays and two waveguides.

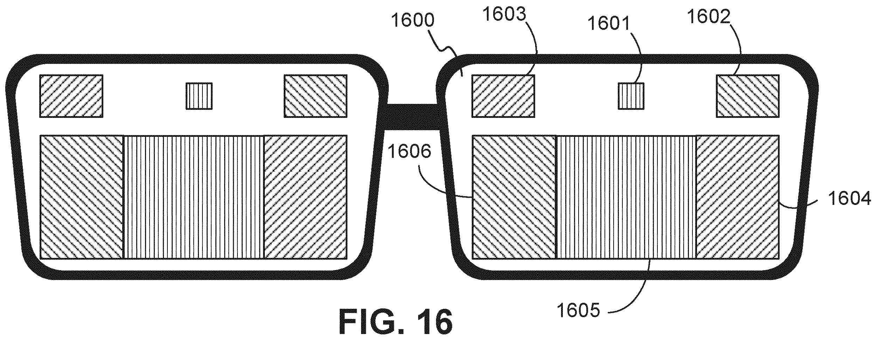

FIG. 16 shows schematically a symmetric pair of waveguides with their flat optical components. In embodiments using two waveguides, the two waveguides may be identical to one another, or they may be, for example, mirror images of one another.

At waveguide 1600, the exit pupil of a projection lens may be matched to the in-coupler 1601. One of the images diffracts into the positive diffractive order (e.g. the +2 order) toward eye pupil expander 1602 and the other image diffracts into a negative diffractive order (e.g. the -2 order) toward eye pupil expander 1603.

According to some embodiments, second order diffraction is used, which allows the use of relatively larger pitch sizes. However, other embodiments are possible, and any positive or negative order may be used.

According to an embodiment of the present disclosure, the image beam emitted from a first display light engine is coupled in the waveguide at the in-coupler and diffracts into the positive second order. The image beam bounces inside of the waveguide towards the first EPE, 1602, where it gets expanded in one direction and deviated toward a second EPE, 1604. The second EPE expands the image beam into a second direction and deviates it toward the out-coupler 1605. The out-coupler diffracts the image from that display out of the waveguide and provides the user with augmented information displayed on the imager on one side of his field of view.

According to an embodiment of the present disclosure, when there is a second a light display engine in the system, the image from the second display diffracts into the negative second order. However, other embodiments are possible, and any negative order could be used.

The image beam from the second display bounces inside of the waveguide towards a third EPE, 1603, where it gets expanded in one direction and deviated toward a fourth EPE, 1606. The fourth EPE expands the image beam into a second direction and deviates it toward the out-coupler 1605. The out-coupler diffracts the image from that display out of the waveguide and provides the user with augmented information displayed on the imager on the other side of his field of view. It is to be noted that the first EPE, 1602, and the third EPE, 1603, have the same pitch size. Similarly, the second EPE, 1604, and the fourth EPE, 1606, have the same pitch size.

The principle has been disclosed up to now as a monochromatic system with just one waveguide per eye.

According to another embodiment, if a full color system is desirable, then more than one waveguide may be used for each eye. For example, one waveguide per color may be used. This results in three waveguides per eye for an RGB system. In that case, the diffraction gratings used for each one of the RGB colors are designed for the color of the respective waveguide into which it is integrated.

The present disclosure also relates to a diffraction grating configured for deviating light beams coupled into a waveguide in total internal reflection mode, by a deviation angle, wherein a grating pitch of the diffraction grating is determined as a function of the deviation angle such that a maximum range of angles of light beams remains in TIR mode in said waveguide after being deviated.

According to the principle disclosed herein, a waveguide is disclosed which comprises such a diffraction grating.

In classical imaging systems, optics transport images between conjugated planes using refractive and reflective optical component (lenses and mirrors). In these systems, beam size and aperture are defined in image and pupil planes, with homogeneous space propagation between them. Waveguide based optical systems for Augmented Reality (AR) typically use diffraction gratings as optical components for a series of functions. Major functions of these diffraction gratings are to fold or deviate beams in an efficient and compact manner. As disclosed above, such diffraction gratings are used to expand the pupil.

A further function is to deviate the image inside of the waveguide to change its direction of propagation. In these functions, flat waveguide optics offer the capacity to fold or split beams, as mirrors do, while increasing the optical path by multitudinous reflections (TIR mode) in a high index material. This brings compactness to the system.

The diffraction gratings are used to couple an image into a waveguide where the image further propagates in TIR mode. A difficulty is to deviate the image and still stay in TIR mode, while matching at best the shape and extent of an incoming beam. For this purpose, it is desirable for a TIR diffraction grating to be configured to transmit the largest possible FoV in another direction.

According to a principle disclosed herein, a waveguide is designed which deviates an imaging beam in TIR mode, avoiding both extent loss and pupilar occultation for rectangular section beams defined by a Horizontal and a Vertical FoV (HFoV and VFoV).

According to a principle disclosed herein, a diffraction grating is designed that deviates an image having a HFoV and a VFoV. The gratings parameters to find are orientation and grating's pitch. A constraint is to deviate an image which is already in TIR mode, which means that every ray of the image inside the waveguide has its main polar angle value within a range defined by the critical angle and the grazing angle value. It has also a range of azimuth angle values. Hence, the diffraction grating is in conical mount. After deviation by the grating, the polar angle shall still be comprised between the critical angle and the grazing angle, thus staying in TIR mode. The direction of propagation of the beam after this diffraction is oriented towards another direction. Desirable properties of a diffraction grating are discussed below, in terms of orientation and grating pitch size, that satisfies that above discussed functionalities and maximize the operation for the highest possible field of view.

According to the present disclosure, an analytical solution is given such that the diffraction grating is designed for a large field of view. A set of equations is provided below to set up the diffraction grating which also gives more insights into the system's limitations, constrains and possibilities. The performances in terms of angular transmission functions are thus totally defined and this allows avoiding the loss of content and energy of the image in the diffraction process. Precision obtained on the system design also avoids over-specification of the device and then provides an optimal compactness for a given extent to transport.

Some explanations and mathematical basics are provided in the following description in order to help understanding the principles disclosed herein.

### Conical diffraction of an in-coupler.

In general, diffraction gratings are analyzed and configured for in-plane diffraction, which means that the incident ray and the diffracted ray both lie in the same plane that is perpendicular to the diffraction grating. However, a light engine used to illuminate an in-coupler produces rays that have also azimuth deviation in addition to polar deviation. In the following explanations, a ray will be described in spherical coordinates by its polar and azimuth angles, its direction being normalized.

A ray before the waveguide and incident on the in-coupler has the coordinates $(\theta_i, \phi_i)$, $\theta_i$ being the polar angle and $\phi_i$ being the azimuth angle. In general, this ray is in air and is diffracted into a waveguide by the in-coupler grating of the waveguide as $(\theta_d, \phi_d)$. Inside the waveguide, this ray needs to be in TIR mode, meaning that:

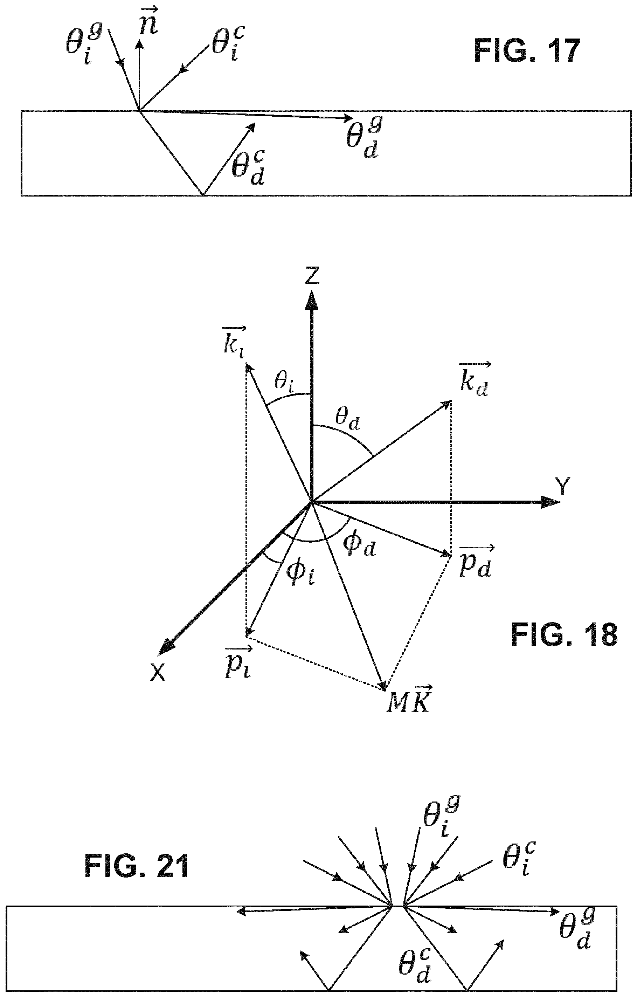

$$\sin \theta_d^c = \frac{1}{n_2} < \sin \theta_d < \sin \theta_d^g$$ where $n_2$ is the index of refraction of the waveguide, $\theta_d^g$ is the grazing limit in the waveguide and $\theta_d^c$ is the critical angle. FIG. 17 illustrates a critical ray and grazing incident and diffracted rays.

FIG. 18 illustrates a coordinate system for conical diffraction. On this figure, the projection of the incident and diffracted wave vectors on the X-Y plane are denoted $\vec{p_i}$ and $\vec{p_d}$. There is also the grating vector which is perpendicular to the grating lines and multiplied by the diffraction order M.

The normalized and right handed coordinate system (x,y,z) has a base $(\vec{e_1}, \vec{e_2}, \vec{e_3})$. The incident wave vector $\vec{k_i} = (k_{xi}, k_{yi}, k_{zi})$ is shown with its spherical angles $(\theta_i, \phi_i)$. The incident wave vector has a polar angle $\theta_i$ and an azimuth angle $\phi_i$. It projects onto the X-Y plane as the vector $\vec{p_i}$ and mathematically : $\vec{p_i} = \vec{k_i} - k_{zi} \times \vec{e_3}$. The diffracted ray is a combination of diffraction and refraction. The waveguide's refractive index is $n_2$.

The wave vector $\vec{k_i}$ is incident on the grating under the polar angle $\theta_i$ and azimuth angle $\phi_i$.

$$\vec{k_i} = \frac{2\pi n_2}{\lambda} \times (\sin \theta_i \times \cos \phi_i, \sin \theta_i \times \sin \phi_i, \cos \theta_i).$$

The diffracted wave has a wave vector $\vec{k_d}$ that has a polar angle $\theta_d$ and an azimuth angle $\phi_d$,

$$\vec{k_d} = \frac{2\pi n_2}{\lambda} \times (\sin\theta_d \times \cos\phi_d, \sin\theta_d \times \sin\phi_d, \cos\theta_d).$$

Further, the grating vector is $\vec{K} = \frac{2\pi}{\Lambda}(\cos\phi_K, \sin\phi_K)$, where A is the grating's pitch. $M\vec{K}$

The conical diffraction equation formulas can be applied for the projected wave vectors: $M \times \vec{K} = \vec{p_i} + \vec{p_d}$ and for the out-of-plane component of the diffracted wave vector, the equation is:

$$k_{zd} = \sqrt{\left|\vec{k_i}\right|^2 - k_{xd}^2 - k_{yd}^2}$$

, where M is the diffraction order and $k_{xd}$ and $k_{yd}$ are calculated by the previous equation set of the application of the conical diffraction equation formulas for the projected wave vectors. Finally, the set of conical diffraction equations is as follows

$$n_2 \times \begin{pmatrix} \sin\theta_d \times \cos\phi_d \\ \sin\theta_d \times \sin\phi_d \end{pmatrix} = M\frac{\lambda}{\Lambda}\begin{pmatrix} \cos\phi_K \\ \sin\phi_K \end{pmatrix} - \begin{pmatrix} \sin\theta_i \times \cos\phi_i \\ \sin\theta_i \times \sin\phi_i \end{pmatrix},$$

with $n_1$=1 being the refractive index of the host medium, for instance air.

A goal is to calculate the spherical coordinates $(\theta_d, \phi_d)$ when $\theta_i$ varies from 0 to 90 degrees and $\phi_i$ from 0 to 360 degrees. For the in-coupler analysis, the diffraction grating is along the x-axis, meaning that $\phi_K$ = 0. The diffracted wave vector's direction can be calculated by solving the conical equation for $(\theta_d, \phi_d)$:

$$\tan\phi_d = \frac{-\sin\theta_i \times \sin\phi_i}{M\frac{\lambda}{\Lambda} - \sin\theta_i \times \cos\phi_i}$$

$$\sin\theta_d = -\frac{\sin\theta_i \times \sin\phi_i}{n_2 \times \sin\phi_d}$$

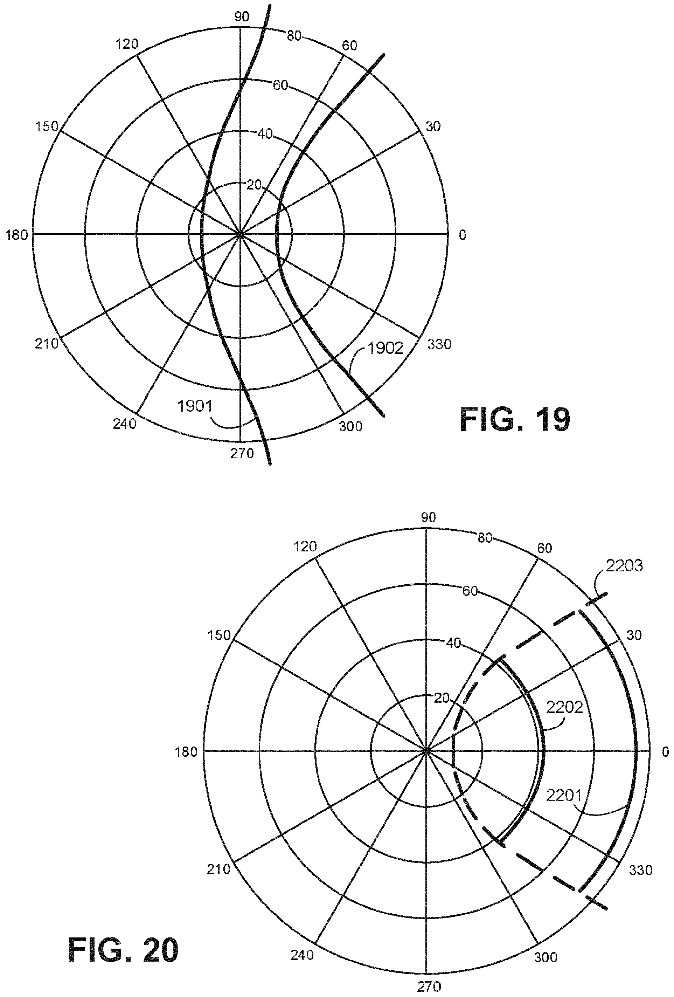

This set of equations is analyzed in a polar diagram where the radial coordinate is the polar angle and the azimuth angle is $\phi$, as illustrated in FIG. 19. Angular values are plotted for a system with M=1, $\lambda$=625nm, $n_2$=1.5 and $\Lambda$=500nm. The polar coordinates show the incoming angles $(\theta_i, \phi_i)$. In FIG. 19, the curve 1901 represents the grazing limit, indicating the angles of incident light that are diffracted into the waveguide at the grazing angle (75°, in this case). The curve 1902 represents the TIR limit, indicating the angles of incident light that are diffracted into the waveguide at the critical angle. Incident light with angles between curves 1901 and 1902 will propagate in the waveguide through total internal reflection.

FIG. 20 illustrates diffracted angles in the waveguide. The polar coordinates show the diffracted angles $(\theta_d, \phi_d)$. Curve 2201 represents the grazing angle (here, 75°), curve 2202 represents the critical angle. Dashed curve 2203 encloses angles of diffracted light in the waveguide. Light rays having angles within the arcuate area enclosed by curves 2201, 2202, and 2203 is capable of propagating within the waveguide.

It can be seen that the diffracted wave vectors have a preferred direction which is the x direction and which is in the direction of the grating vector and, as expected, perpendicular to the grating lines. The polar plot shows also the TIR limit. Diffracted rays above this TIR limit iso curve are in TIR mode inside of the waveguide while rays beyond that value just go through the waveguide. There is also a grazing limit iso-curve at 75 degrees which is called the grazing limit since grazing diffracted rays above 75 degrees are declared as being difficult to extract. This sort of graph shows more synthetically the behavior of the in- coupler for incoming rays and what happens to the diffracted rays.

**Dual diffraction mode.**

An in-coupling grating can also be designed to couple one half of the image field into the waveguide propagating into one direction and the other half propagating into a second direction.

According to the invention, as discussed above, the in-coupling grating may be configured to couple two images into the waveguide with one image propagating into one direction into the waveguide, and the other image propagating into a second direction into the waveguide. FIG. 21 illustrates such a dual diffraction mode, with negative diffractive orders being coupled toward the left and positive diffractive orders being coupled toward the right.

An advantage of such a system is to approximately double the field of view after recombining the two image halves before reaching the eye pupil. In the case of two images to couple into the waveguide, this dual mode can also be used for displaying each one of the two images on one side of the field of view.

An equation that may be used to select the pitch size of the in-coupling grating is:

$$\Lambda_i = \frac{M\lambda}{n_2 \sin\theta_d^g - \sin\theta_i^g}$$

The additional angles appearing here are $\theta_d^g$ which is the maximum grazing incidence inside the waveguide. Typically, this value is set to $\theta_d^g = 75°$. The second angle is $\theta_i^g$ and this value controls the amount of overlap between both diffraction modes.

**Orientation and pitch size of a fold grating according to an embodiment.**

For calculating EPE pitch sizes according to some embodiments, it is supposed that the image beam has been coupled into the waveguide by an in-coupling grating. A single or a dual mode diffraction grating can be used. In any case, in the following, one direction inside of the waveguide is considered, for example on the beam that has a propagation direction of $\phi_d = 0$. Similar reasoning could be made for the other beam that has the direction $\phi_d = \pi$.

For the propagation direction at $\phi_d = 0$, the azimuth extends from $\phi_d = -30$ to $\phi_d = 30°$ approximately while the polar angle ranges from the TIR angle to $\theta_d = 75°$.

It is also supposed that the in-coupling grating and deviating grating are at the same side of the waveguide and both are provided with a Cartesian coordinate system of the same orientations. FIG. 18 illustrates the coordinate system at the TIR in-coupling diffraction grating. A first difference for the deviating grating with respect to the in-coupling grating is that the incident wave vector on the deviating grating $\vec{K}$ is $\vec{k_d}$ and the diffracted wave vector is called $\vec{k_e}$.

A second difference is that both incident and diffracted wave vectors are within the waveguide, whereas in the in-coupler case, the incident wave vector is in air. It is supposed that the unknown grating pitch (to be determined) is $\Lambda_e$.

By applying the grating equations, then:

$$\begin{pmatrix} \sin\theta_e \times \cos\phi_e \\ \sin\theta_e \times \sin\phi_e \end{pmatrix} = \alpha \begin{pmatrix} \cos\phi_K \\ \sin\phi_K \end{pmatrix} - \begin{pmatrix} \sin\theta_d \times \cos\phi_d \\ \sin\theta_d \times \sin\phi_d \end{pmatrix}, \text{ where } \alpha = \frac{M\lambda}{n_2\Lambda_e}.$$

From these equations, the value of the polar diffracted angle is calculated by:

$(\sin\theta_e)^2 = (\alpha \times \cos\phi_K - \sin\theta_d \times \cos\phi_d)^2 + (\alpha \times \sin\phi_K - \sin\theta_d \times \sin\phi_d)^2$, and as the condition on diffracted rays by the in-coupler is that $\frac{1}{n_2} < \sin\theta_d < \sin\theta_d^g$, a range of values for the rays diffracted by the deviation grating can be similarly set. The rays shall all stay in TIR mode, whatever their incoming directions $(\theta_d, \phi_d)$ are:

$$\frac{1}{n_2^2} < (\sin\theta_e)^2 < (\sin\theta_d^g)^2,$$

with these two conditions, a set of two trinomial equations is provided below from which a lower $\Lambda_e^m$ and an upper $\Lambda_e^M$ boundary for the pitch $\Lambda_e$ can be derived:

$$\alpha_M^2 - 2\alpha_M \sin\theta_d \cos(\phi_K - \phi_d) + (\sin\theta_d)^2 - \frac{1}{n_2} = 0$$

$$\alpha_M^2 - 2\alpha_M \sin\theta_d \cos(\phi_K - \phi_d) + (\sin\theta_d)^2 - (\sin\theta_d^g)^2 = 0$$

The meaningful solution for each equation is:

$$\alpha_M = \sin\theta_d \cos(\phi_K - \phi_d) + \sqrt{\frac{1}{n_2^2} - (\sin\theta_d)^2(\sin(\phi_K - \phi_d))^2}$$

$$\alpha_m = \sin\theta_d \cos(\phi_K - \phi_d) + \sqrt{(\sin\theta_d^g)^2 - (\sin\theta_d)^2(\sin(\phi_K - \phi_d))^2}$$

and grating pitch sizes are therefore:

$$\Lambda_e^M = \frac{M\lambda/n_2}{\sin\theta_d \cos(\phi_K - \phi_d) + \sqrt{\frac{1}{n_2^2} - (\sin\theta_d)^2(\sin(\phi_K - \phi_d))^2}}$$

$$\Lambda_e^m = \frac{M\lambda/n_2}{\sin\theta_d \cos(\phi_K - \phi_d) + \sqrt{(\sin\theta_d^g)^2 - (\sin\theta_d)^2(\sin(\phi_K - \phi_d))^2}}$$

where the pitch is in the interval $\Lambda_e^m \leq \Lambda_e \leq \Lambda_e^M$ .

In the above two equations giving the grating pitch sizes, there is a dependency on the azimuth angle $\phi_d$. This azimuth angle can vary. The range of values it can explore is a domain for which the upper pitch size is always larger than the lower pitch size. If the azimuth angle gets out of this domain, there is no pitch size that possibly satisfies the last equations since this would result on $\Lambda_e^M < \Lambda_e^m$ , which is not possible.

As $\Lambda_e^M$ is decreasing with growing azimuth angles and $\Lambda_e^m$ is increasing with decreasing values of the azimuth angle, and as a system that symmetrically handles positive and negative azimuth angles is desirable, there is a maximum value $\beta$ = max $\phi_d$ and a minimum value $\gamma$ = min $\phi_d$ for which $\Lambda_e^m = \Lambda_e = \Lambda_e^M$ and moreover $\gamma$ = -$\beta$. Then a deviating grating may be configured that has the following properties:

- It has a maximum acceptance angle of 2$\beta$, which means that this device accepts the greatest possible image field of view for a specific orientation $\phi_K$ of the grating.
- No other design can have a greater field of view.
- The corresponding pitch size achieving this is unique.

In order to find out the field of view and the pitch size, the following relationship is solved:

$$\exists\beta \ / \min_{x=\sin\theta_d} \Lambda_e^M(x, \phi_K, \phi_d = \beta) = \max_{x=\sin\theta_d} \Lambda_e^m(x, \phi_K, \phi_d = -\beta) \ (1)$$

In fact, the min and max as a function of $\theta_d$ should rather be sought. But similar results for the min and max are obtained if the min and max are sought as a function of x= sin $\theta_d$. This is a variable change that simplifies greatly the derivatives and their solution.

Depending on the value of $\phi_K$ - $\beta$, the function $\Lambda_e^M$ reaches its minimal value at one of the following three points:

$$\Lambda_e^M\left(@ \ x/\frac{\partial\Lambda_e^M}{\partial x} = 0\right) = M\lambda\sin(\phi_K - \beta)$$

$$\Lambda_e^M\left(@x = \frac{1}{n_2}\right) = \frac{M\lambda}{2\cos(\phi_K - \beta)}$$

$$\Lambda_e^M\left(@x = \sin\theta_d^g\right) = \frac{NM\lambda}{\cos(\phi_K - \beta) + \sqrt{N^2 - (\sin(\phi_K - \beta))^2}}$$

In a similar way, $\Lambda_e^m$ reaches its maximum value at one of the following points:

$$\Lambda_e^m\left(@x / \frac{\partial \Lambda_e^m}{\partial x} = 0\right) = NM\lambda\sin(\phi_K + \beta)$$

$$\Lambda_e^m\left(@x = \sin\theta_d^g\right) = \frac{NM\lambda}{2\cos(\phi_K + \beta)}$$

$$\Lambda_e^m\left(@x = \frac{1}{n_2}\right) = \frac{M\lambda}{\cos(\phi_K + \beta) + \sqrt{\frac{1}{N^2} - (\sin(\phi_K + \beta))^2}}$$

where N is the ratio between the sinus of the TIR and the grazing angle:

$$N = \frac{1}{n_2} / \sin\theta_d^g$$

In order to solve the relationship (1), four different cases are distinguished among the set of 3 previous equations for the maximum size and minimum size of the fold grating pitch and according to the value of the orientation $\phi_K$ of the fold grating. These four cases allow to define completely the parameters of the TIR diffraction grating to deviate an image beam inside of the waveguide according to an embodiment of the present disclosure.

| | Case 1 |
|---|---|
| $\phi_K$ | $\frac{1}{2}\left(\cos^{-1}\left(\frac{N}{\sqrt{2}}\right) + 45°\right) < \phi_K \leq 90°$ |
| $\Lambda_e$ | $\dfrac{M\lambda}{2 \times \cos\left(\phi_K - \Delta\phi/2\right)}$ |
| $\Delta\phi$ | $2\cos^{-1}\left(\sqrt{\dfrac{(N+1)^2(\tan\phi_K)^2}{(1-N)^2 + (N+1)^2(\tan\phi_K)^2}}\right)$ |
| | Case 2 |
| $\phi_K$ | $\frac{1}{2}\left(\cos^{-1}\left(\frac{N}{2\sin\tan^{-1}N}\right) + \tan^{-1}N\right) < \phi_K \leq \frac{1}{2}\left(\cos^{-1}\left(\frac{N}{\sqrt{2}}\right) + 45°\right)$ |
| $\Lambda_e$ | $M\lambda\sin(\phi_K - \Delta\phi/2)$ |
| $\Delta\phi$ | $\sin^{-1}(\sin(2\phi_K) - N)$ |

(continued)

| | Case 3 |
|---|---|
| $\phi_K$ | $$\frac{1}{2}\left(\cos^{-1}\left(\frac{N+2-N^2}{2\sqrt{N+1}}\right)+\sin^{-1}\sqrt{\frac{3-N}{4}}\right) < \phi_K$$ $$\leq \frac{1}{2}\left(\cos^{-1}\left(\frac{N}{2\sin\tan^{-1}N}\right)+\tan^{-1}N\right)$$ |
| $\Lambda_e$ | $$\frac{NM\lambda}{2\times\cos\left(\phi_K - {\Delta\phi}/{2}\right)}$$ |
| $\Delta\phi$ | $$2\tan^{-1}\left[\frac{\cos\phi_K - \sqrt{\Delta}}{2(\alpha + \sin\phi_K)}\right]\ ,$$ with $\alpha = \frac{1-N^2}{8\times\sin\phi_K}$ and $\Delta = (\cos\phi_K)^2 - 4\alpha(\alpha + \sin\phi_K)$ |
| | Case 4 |
| $\phi_K$ | $$\phi_K \leq \frac{1}{2}\left(\cos^{-1}\left(\frac{N+2-N^2}{2\sqrt{N+1}}\right)+\sin^{-1}\sqrt{\frac{3-N}{4}}\right)$$ |
| $\Lambda_e$ | $$\frac{NM\lambda}{\cos\left(\phi_K - {\Delta\phi}/{2}\right)+\sqrt{N^2 - (\sin(\phi_K - {\Delta\phi}/{2}))^2}}$$ |
| $\Delta\phi$ | $$2\cos^{-1}\left[\frac{\sqrt{1+\cos(2\phi_K)}}{\sqrt{2}\times\cos(2\phi_K)}\right]$$ |

And the image is deviated by the angle $2\phi_K$.

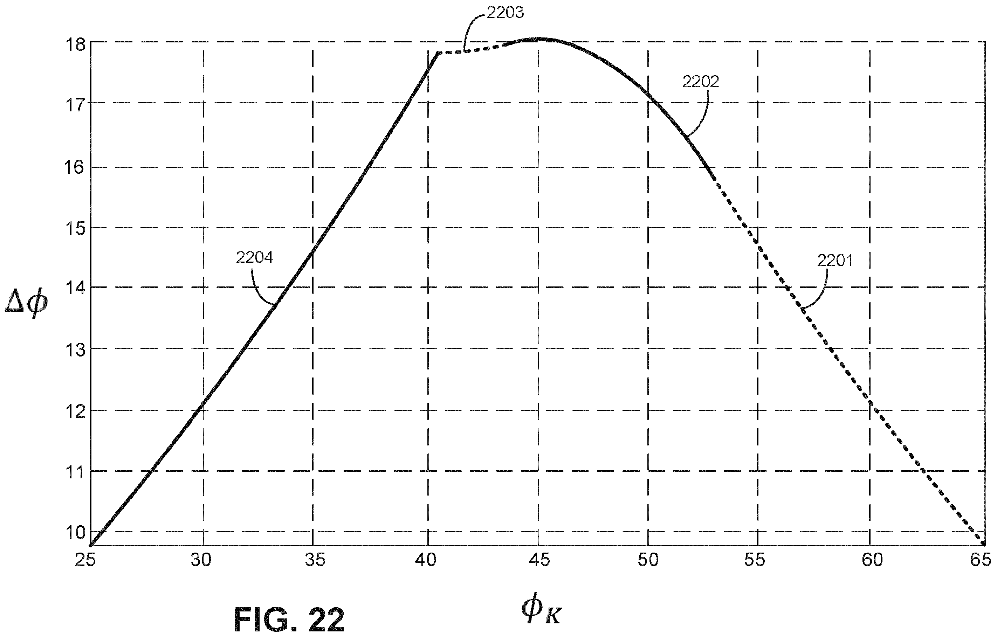

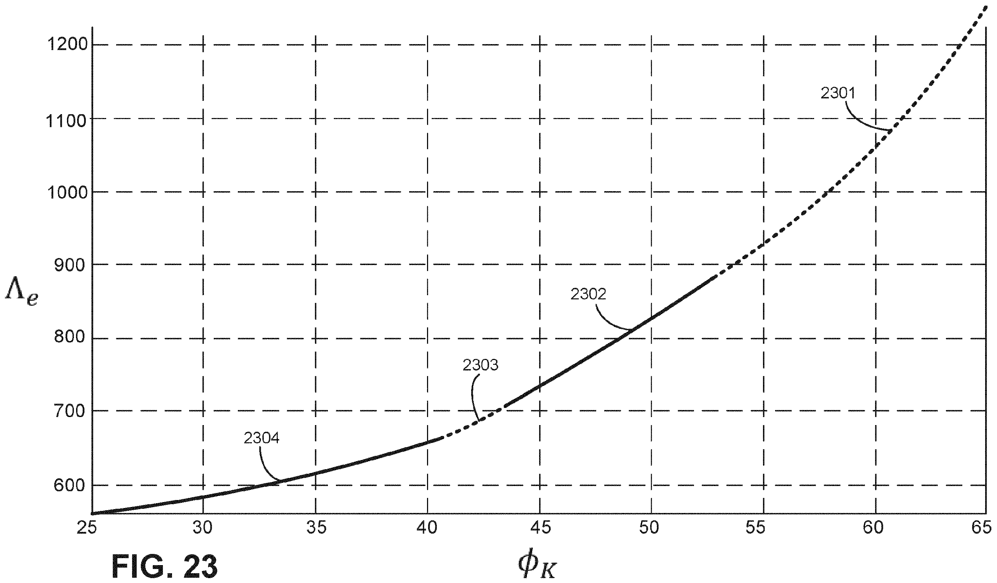

The curve for the angular acceptance is shown in FIG. 22 and the optimal pitch size on FIG. 23. Each section of both curves is in correspondence with the sections indicated in the previous table. FIG. 22 illustrates the vertical field of view $\Delta\phi$ in degrees as a function of the grating orientation $\phi_K$ in degrees for the case n=1.5, $\lambda = 625nm$, M=2, $\theta_d^g = 75$, and $\theta_d^c = 2$. In FIG. 22, section 1 is represented by the dotted line labeled 2201, section 2 is represented by the solid line labeled 2202, section 3 is represented by the dotted line labeled 2203, section 4 is represented by the dotted line labeled 2204. FIG. 23 illustrates the grating pitch $\Lambda_e$ in nm as a function of the grating orientation $\phi_K$ in degrees for the same case as FIG. 22. In FIG. 23, section 1 is represented by the dotted line labeled 2301, section 2 is represented by the solid line labeled 2302, section 3 is represented by the dotted line labeled 2303, and section 4 is represented by the dotted line labeled 2304.

According to the interval of the orientation of the grating, four different cases are considered. The highest angular acceptance angle is at $\phi_K = 45°$. The angular bandwidth drops as soon as the acceptance angle goes away from this value.

According to an embodiment of the present disclosure, a waveguide with an in-coupler and a grating for deviating an image by 90° in the waveguide in terms of field of view is proposed wherein the grating is configured according to the principle disclosed above.

According to an embodiment of the present disclosure, a system is proposed comprising a display that has a rectangular shape and its image injected into the waveguide of the system by the in-coupler of the waveguide. The proposed system allows to transmit an image generated by the display through the system without being cropped by angles diffracted out of the TIR regime.

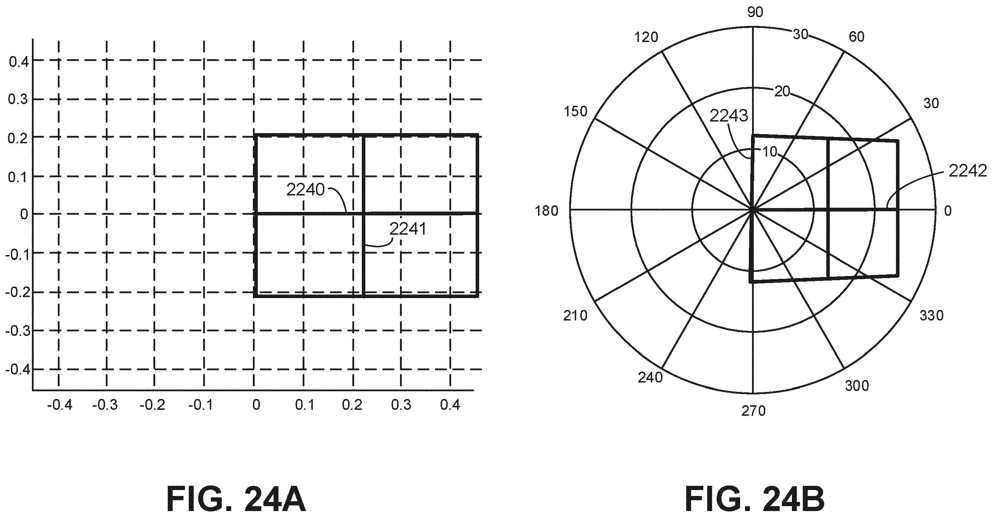

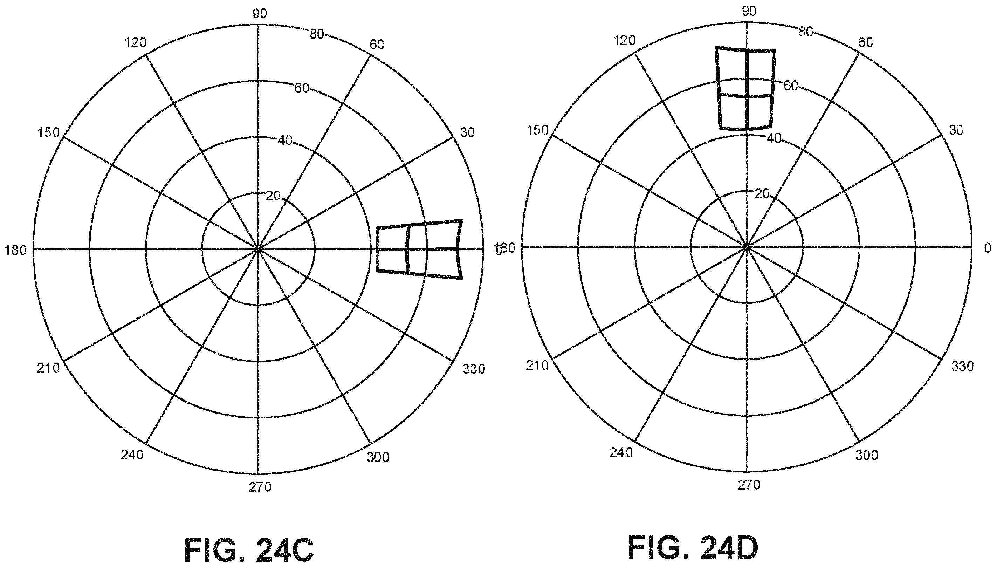

Prior to being injected into the waveguide, each spherical wave sent out by each pixel at position (x,y) on the display's matrix is converted in a plane wave of direction $(\theta_i, \phi_i)$ by a lens of normalized focal length 1mm. It is assumed that the system has an in-coupler in dual diffraction mode, hence in FIGs. 24A-24D, only half of the display's field is represented.

Such visualization helps to illustrate the greatest horizontal display length that can be used as being the line 2240) on FIG. 24A, and the greatest vertical display length as the line 2241. On FIG. 24B, the horizontal field of view is the greatest $\theta_i$, for the line 2242 ($\approx 25$ degrees), while the vertical field of view is the greatest $\theta_i$, of the line 2243 ($\approx \pm 12$ degrees). The system with an in-coupler and a fold grating has a horizontal FoV of 48.5° and a vertical FoV of 23.7°.

The aspect ratio of the latter is problematic, usually a display with 16:9 aspect ratio is desirable. This means that only a smaller portion of the horizontal field of view is usable in the end and in order to get a better vertical FoV, higher index waveguides may be used.

According to an embodiment of the present disclosure, a fold diffraction grating configured according to the principle disclosed above can be integrated in the optical system illustrated in FIG. 16. For instance, the first and second EPE of the waveguide can be configured according to the principle disclosed above using the four cases equations defined in the table, depending on the angle of deviation that the optical system uses for deviating the light beams.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

The scope of protection is defined by the appended claims.

## Claims

1. An apparatus comprising:

   at least one waveguide (1504, 1600) having an in-coupler (1601);
   a first display (1201, 1501) configured to generate a first image and a second display (1202, 1502) configured to generate a second image, the first and second displays being separated by a central space without a display; and
   a lens system (1203, 1503) configured to direct the first image and the second image onto the in-coupler;
   wherein the in-coupler is configured to couple the first image into the waveguide using a positive diffractive order and to couple the second image into the waveguide using a negative diffractive order, wherein the first image propagates into one direction into the waveguide and the second image propagates into a second direction into the waveguide, and
   wherein the lens system has an optical axis, and the first display and the second display are arranged on opposite sides of the optical axis (1205).

2. The apparatus of claim 1, wherein the in-coupler is configured to couple the first image and second image into the waveguide using diffractive orders having absolute values higher than one.

3. The apparatus of claim 1 or 2, wherein the optical axis of the lens system does not intersect any display of the apparatus.

4. The apparatus of any one of claims 1-3, wherein the waveguide further comprises an out-coupler and at least one eye pupil expander along at least a first optical path from the in-coupler to the out-coupler.

5. The apparatus of any one of claims 1-4, wherein the waveguide further comprises an out-coupler and a first and a second eye pupil expander along a first optical path from the in-coupler to the out-coupler, the first and second eye pupil expanders being configured to guide the first image to the out-coupler.

6. The apparatus of any one of claims 1-5, wherein the waveguide further comprises an out-coupler and a third and a fourth eye pupil expander along a second optical path from the in-coupler to the out-coupler, the third and fourth eye pupil expanders being configured to guide the second image to the out-coupler.

7. A method comprising:

generating a first image on a first display (1201, 1501) and a second image on a second display (1202, 1502), the first and second displays being separated by a central space without a display; and

using a lens system (1203, 1503), directing the first image and the second image onto an in-coupler (1601) of a waveguide (1504, 1600);

wherein the in-coupler is configured to couple the first image into the waveguide using a positive diffractive order and to couple the second image into the waveguide using a negative diffractive order, wherein the first image propagates into one direction into the waveguide and the second image propagates into a second direction into the waveguide, and

wherein the lens system has an optical axis (1205), and the first display and the second display are arranged on opposite sides of the optical axis.

8. The method of claim 7, wherein the in-coupler is configured to couple the first image and second image into the waveguide using diffractive orders having absolute values higher than one.

9. The method of claim 7 or 8, wherein the optical axis does not intersect any display of the apparatus.

10. The method of any one of claims 7-9, wherein the waveguide further comprises an out-coupler, at least a first eye pupil expander configured to guide the first image to the out-coupler, and at least a second eye pupil expander configured to guide the second image to the out-coupler.

11. The method of claim 10, wherein a grating pitch $\Lambda_e$ of at least one of the eye pupil expanders is determined as follows:

○ if $\frac{1}{2}\left(\cos^{-1}\left(\frac{N}{\sqrt{2}}\right)+45°\right)<\phi_K\leq 90°$, $\Lambda_e=\frac{M\times\lambda}{2\times\cos\left(\phi_K-\Delta\phi/2\right)}$ , where $\phi_K$ is half of the deviation

angle, $N=\frac{1/n_2}{\sin\theta_d^g}$ where $n_2$ is the refractive index of the material of the waveguide, $\theta_d^g$ is a maximum grazing incident angle inside the waveguide, M is the diffraction order, $\lambda$ is the wavelength of the light coupled into the waveguide, and $\Delta\phi$ is the maximum angle of the deviated light given by: $\Delta\phi$ = 2 $\times$

$\cos^{-1}\left(\sqrt{\frac{(N+1)^2\times(\tan\phi_K)^2}{(1-N)^2+(N+1)^2\times(\tan\phi_K)^2}}\right)$ ,

○ if $\frac{1}{2}\left(\cos^{-1}\left(\frac{N}{2\times\sin\tan^{-1}N}\right)+\tan^{-1}N\right)<\phi_K\leq\frac{1}{2}\left(\cos^{-1}\left(\frac{N}{\sqrt{2}}\right)+45°\right)$ , $\Lambda_e$ =

$M\times\lambda\times\sin(\phi_K-\Delta\phi/2)$ , and $\Delta\phi$ = sin⁻¹(sin(2 $\times$ $\phi_K$) - N),

○ if $\frac{1}{2}\left(\cos^{-1}\left(\frac{N+2-N^2}{2\times\sqrt{N+1}}\right)+\sin^{-1}\sqrt{\frac{3-N}{4}}\right)<\phi_K\leq\frac{1}{2}\left(\cos^{-1}\left(\frac{N}{2\times\sin\tan^{-1}N}\right)+\right.$ tan⁻¹ $N$),

$\Lambda_e=\frac{N\times M\times\lambda}{2\times\cos\left(\phi_K-\Delta\phi/2\right)}$ , and $\Delta\phi=2\times\tan^{-1}\left[\frac{\cos\phi_K-\sqrt{\Delta}}{2\times(\alpha+\sin\phi_K)}\right]$ , with $\alpha$ = $\frac{1-N^2}{8\times\sin\phi_K}$ and $\Delta$= (cos $\phi_K$)² - 4 $\times$ $\alpha$ $\times$ ($\alpha$ + sin $\phi_K$),

○ if $\phi_K\leq\frac{1}{2}\left(\cos^{-1}\left(\frac{N+2-N^2}{2\times\sqrt{N+1}}\right)+\sin^{-1}\sqrt{\frac{3-N}{4}}\right)$ , $\Lambda_e=\frac{N\times M\times\lambda}{\cos\left(\phi_K-\Delta\phi/2\right)+\sqrt{N^2-(\sin(\phi_K-\Delta\phi/2))^2}}$ , and

$\Delta\phi=2\times\cos^{-1}\left[\frac{\sqrt{1+\cos(2\times\phi_K)}}{\sqrt{2}\times\cos(2\times\phi_K)}\right]$ .

**Patentansprüche**

1.  Vorrichtung, umfassend:

    mindestens einen Wellenleiter (1504, 1600), der einen Einkoppler (1601) aufweist;
    ein erstes Display (1201, 1501), das dazu eingerichtet ist, ein erstes Bild zu generieren, und ein zweites Display (1202, 1502), das dazu eingerichtet ist, ein zweites Bild zu generieren, wobei das erste und das zweite Display durch einen mittigen Raum ohne ein Display getrennt sind; und
    ein Linsensystem (1203, 1503), das dazu eingerichtet ist, das erste Bild und das zweite Bild auf den Einkoppler zu richten;
    wobei der Einkoppler dazu eingerichtet ist, das erste Bild unter Verwendung einer positiven Beugungsordnung in den Wellenleiter einzukoppeln und das zweite Bild unter Verwendung einer negativen Beugungsordnung in den Wellenleiter einzukoppeln, wobei sich das erste Bild in einer Richtung in den Wellenleiter hinein ausbreitet und das zweite Bild sich in einer zweiten Richtung in den Wellenleiter hinein ausbreitet, und
    wobei das Linsensystem eine optische Achse hat, und das erste Display und das zweite Display auf gegenüberliegenden Seiten der optischen Achse (1205) angeordnet sind.

2.  Vorrichtung nach Anspruch 1, wobei der Einkoppler dazu eingerichtet ist, das erste Bild und das zweite Bild unter Verwendung von Beugungsordnungen, die absolute Werte von größer als eins haben, in den Wellenleiter einzukoppeln.

3.  Vorrichtung nach Anspruch 1 oder 2, wobei die optische Achse des Linsensystems kein Display der Vorrichtung schneidet.

4.  Vorrichtung nach einem der Ansprüche 1-3, wobei der Wellenleiter des Weiteren einen Auskoppler und mindestens einen Pupillenexpander entlang mindestens eines ersten optischen Pfades von dem Einkoppler zu dem Auskoppler umfasst.

5.  Vorrichtung nach einem der Ansprüche 1-4, wobei der Wellenleiter des Weiteren einen Auskoppler und einen ersten und einen zweiten Pupillenexpander entlang eines ersten optischen Pfades von dem Einkoppler zu dem Auskoppler umfasst, wobei der erste und der zweite Pupillenexpander dazu eingerichtet sind, das erste Bild zu dem Auskoppler zu leiten.

6.  Vorrichtung nach einem der Ansprüche 1-5, wobei der Wellenleiter des Weiteren einen Auskoppler und einen dritten und einen vierten Pupillenexpander entlang eines zweiten optischen Pfades von dem Einkoppler zu dem Auskoppler umfasst, wobei der dritte und der vierte Pupillenexpander dazu eingerichtet sind, das zweite Bild zu dem Auskoppler zu leiten.

7.  Verfahren, umfassend:

    Generieren eines ersten Bildes auf einem ersten Display (1201, 1501) und eines zweiten Bildes auf einem zweiten Display (1202, 1502), wobei das erste und das zweite Display durch einen mittigen Raum ohne ein Display getrennt sind;
    unter Verwendung eines Linsensystems (1203, 1503), Richten des ersten Bildes und des zweiten Bildes auf einen Einkoppler (1601) eines Wellenleiters (1504, 1600);
    wobei der Einkoppler dazu eingerichtet ist, das erste Bild unter Verwendung einer positiven Beugungsordnung in den Wellenleiter einzukoppeln und das zweite Bild unter Verwendung einer negativen Beugungsordnung in den Wellenleiter einzukoppeln, wobei sich das erste Bild in einer Richtung in den Wellenleiter hinein ausbreitet und das zweite Bild sich in einer zweiten Richtung in den Wellenleiter hinein ausbreitet, und
    wobei das Linsensystem eine optische Achse (1205) hat, und das erste Display und das zweite Display auf gegenüberliegenden Seiten der optischen Achse angeordnet sind.

8.  Verfahren nach Anspruch 7, wobei der Einkoppler dazu eingerichtet ist, das erste Bild und das zweite Bild unter Verwendung von Beugungsordnungen, die absolute Werte von größer als eins haben, in den Wellenleiter einzukoppeln.

9.  Verfahren nach Anspruch 7 oder 8, wobei die optische Achse kein Display der Vorrichtung schneidet.

**10.** Verfahren nach einem der Ansprüche 7-9, wobei der Wellenleiter des Weiteren einen Auskoppler, mindestens einen ersten Pupillenexpander, der dazu eingerichtet ist, das erste Bild zu dem Auskoppler zu leiten, und mindestens einen zweiten Pupillenexpander, der dazu eingerichtet ist, das zweite Bild zu dem Auskoppler zu leiten, umfasst.

**11.** Verfahren nach Anspruch 10, wobei ein Gittergrundmaß $\Lambda(e)$ von mindestens einem der Pupillenexpander folgendermaßen bestimmt wird:

○ falls $\frac{1}{2}\left(\cos^{-1}\left(\frac{N}{\sqrt{2}}\right) + 45°\right) < \phi_K \leq 90°$, $\Lambda_e = \frac{M\times\lambda}{2\times\cos\left(\phi_K - \Delta\phi/2\right)}$, wobei $\phi_K$ die Hälfte

○ falls

des Ablenkungswinkels ist, $N = \frac{1/n_2}{\sin\theta_d^g}$, wobei $n_2$ der Brechungsindex des Materials des Wellenleiters ist, $\theta_d^g$ ein maximaler streifender Einfallswinkel im Inneren des Wellenleiters ist, M die Beugungsordnung ist, $\lambda$ die Wellenlänge des in den Wellenleiter eingekoppelten Lichts ist, und $\Delta\phi$ der maximale Winkel des abgelenkten Lichts ist, der gegeben ist durch:

$$\Delta\phi = 2\text{ x }\cos^{-1}\left(\sqrt{\frac{(N+1)^2\times(\tan\phi_K)^2}{(1-N)^2+(N+1)^2\times(\tan\phi_K)^2}}\right),$$

○ falls $\frac{1}{2}\left(\cos^{-1}\left(\frac{N}{2\times\sin\tan^{-1}N}\right) + \tan^{-1}N\right) < \phi_K \leq \frac{1}{2}\left(\cos^{-1}\left(\frac{N}{\sqrt{2}}\right) + 45°\right)$, $\Lambda_e =$

$M\times\lambda\times\sin(\phi_K - \Delta\phi/2)$, und $\Delta\phi = \sin^{-1}(\sin(2\times\phi_K) - N)$,

○ falls $\frac{1}{2}\left(\cos^{-1}\left(\frac{N+2-N^2}{2\times\sqrt{N+1}}\right) + \sin^{-1}\sqrt{\frac{3-N}{4}}\right) < \phi_K \leq \frac{1}{2}\left(\cos^{-1}\left(\frac{N}{2\times\sin\tan^{-1}N}\right) + \tan^{-1}N\right)$,

$\Lambda_e = \frac{N\times M\times\lambda}{2\times\cos\left(\phi_K - \Delta\phi/2\right)}$, und $\Delta\phi = 2\times\tan^{-1}\left[\frac{\cos\phi_K-\sqrt{\Delta}}{2\times(\alpha+\sin\phi_K)}\right]$, mit $\alpha = \frac{1-N^2}{8\times\sin\phi_K}$ und $\Delta = (\cos\phi_K)^2$ - $4\times\alpha\times(\alpha + \sin\phi_K)$,

○ falls $\phi_K \leq \frac{1}{2}\left(\cos^{-1}\left(\frac{N+2-N^2}{2\times\sqrt{N+1}}\right) + \sin^{-1}\sqrt{\frac{3-N}{4}}\right)$,

$\Lambda_e = \frac{N\times M\times\lambda}{\cos\left(\phi_K - \Delta\phi/2\right)+\sqrt{N^2 - (\sin(\phi_K - \Delta\phi/2))^2}}$, und $\Delta\phi = 2\times\cos^{-1}\left[\frac{\sqrt{1+\cos(2\times\phi_K)}}{\sqrt{2}\times\cos(2\times\phi_K)}\right]$.

**Revendications**

**1.** Appareil comprenant :

au moins un guide d'onde (1504, 1600) comportant un coupleur d'entrée (1601) ;
un premier dispositif d'affichage (1201, 1501) configuré pour générer une première image et un deuxième dispositif d'affichage (1202, 1502) configuré pour générer une deuxième image, les premier et deuxième dispositifs d'affichage étant séparés par un espace central ne comportant pas de dispositif d'affichage ; et
un système de lentilles (1203, 1503) configuré pour diriger la première image et la deuxième image sur le coupleur d'entrée,
dans lequel le coupleur d'entrée est configuré pour coupler la première image dans le guide d'onde à l'aide d'un ordre de diffraction positif et pour coupler la deuxième image dans le guide d'onde à l'aide d'un ordre de diffraction négatif, dans lequel la première image se propage dans une direction dans le guide d'onde et la deuxième image se propage dans une deuxième direction dans le guide d'onde, et
dans lequel le système de lentilles présente un axe optique, et le premier dispositif d'affichage et le deuxième dispositif d'affichage sont agencés sur des côtés opposés de l'axe optique (1205).

2. Appareil selon la revendication 1, dans lequel le coupleur d'entrée est configuré pour coupler la première image et la deuxième image dans le guide d'onde à l'aide d'ordres de diffraction présentant des valeurs absolues supérieures à un.

3. Appareil selon la revendication 1 ou 2, dans lequel l'axe optique du système de lentilles ne croise pas de dispositif d'affichage de l'appareil.

4. Appareil selon l'une quelconque des revendications 1 à 3, dans lequel le guide d'onde comprend en outre un coupleur de sortie et au moins un dilatateur de pupille le long d'au moins un premier trajet optique du coupleur d'entrée au coupleur de sortie.

5. Appareil selon l'une quelconque des revendications 1 à 4, dans lequel le guide d'onde comprend en outre un coupleur de sortie et des premier et deuxième dilatateurs de pupille le long d'un premier trajet optique du coupleur d'entrée au coupleur de sortie, les premier et deuxième dilatateurs de pupille étant configurés pour guider la première image vers le coupleur de sortie.

6. Appareil selon l'une quelconque des revendications 1 à 5, dans lequel le guide d'onde comprend en outre un coupleur de sortie et des troisième et quatrième dilatateurs de pupille le long d'un deuxième trajet optique du coupleur d'entrée au coupleur de sortie, les troisième et quatrièmes dilatateurs de pupille étant configurés pour guider la deuxième image vers le coupleur de sortie.

7. Procédé comprenant :

la génération d'une première image sur un premier dispositif d'affichage (1201, 1501) et d'une deuxième image sur un deuxième dispositif d'affichage (1202, 1502), les premier et deuxième dispositifs d'affichage étant séparés par un espace central ne comportant pas de dispositif d'affichage ; et
à l'aide d'un système de lentilles (1203, 1503), la direction de la première image et de la deuxième image sur le coupleur d'entrée (1601) d'un guide d'onde (1504, 1600) ;
dans lequel le coupleur d'entrée est configuré pour coupler la première image dans le guide d'onde à l'aide d'un ordre de diffraction positif et pour coupler la deuxième image dans le guide d'onde à l'aide d'un ordre de diffraction négatif, dans lequel la première image se propage dans une direction dans le guide d'onde et la deuxième image se propage dans une deuxième direction dans le guide d'onde, et
dans lequel le système de lentilles présente un axe optique (1205), et le premier dispositif d'affichage et le deuxième dispositif d'affichage sont agencés sur des côtés opposés de l'axe optique.

8. Procédé selon la revendication 7, dans lequel le coupleur d'entrée est configuré pour coupler la première image et la deuxième image dans le guide d'onde à l'aide d'ordres de diffraction présentant des valeurs absolues supérieures à un.

9. Procédé selon la revendication 7 ou 8, dans lequel l'axe optique ne croise pas de dispositif d'affichage de l'appareil.

10. Procédé selon l'une quelconque des revendications 7 à 9, dans lequel le guide d'onde comprend en outre un coupleur de sortie, au moins un premier dilatateur de pupille configuré pour guider la première image vers le coupleur de sortie et au moins un deuxième dilatateur de pupille configuré pour guider la deuxième image vers le coupleur de sortie.

11. Procédé selon la revendication 10, dans lequel un pas de réseau $\Lambda_e$ d'au moins l'un des dilatateurs de pupille est déterminé comme suit :

$$\circ \text{ si } \frac{1}{2}\left(\cos^{-1}\left(\frac{N}{\sqrt{2}}\right)+45°\right) < \phi_K \leq 90°, \ \Lambda_e = \frac{M\times\lambda}{2\times\cos\left(\phi_K - \Delta\phi/2\right)}, \text{ où } \phi_K \text{ est la moitié de l'angle de}$$

déviation, $N = \frac{1/n_2}{\sin\theta_d^g}$ , où $n_2$ est l'indice de réfraction du matériau du guide d'onde, $\theta_d^g$ est l'angle d'incidence rasante maximal à l'intérieur du guide d'onde, $M$ est l'ordre de diffraction, $\lambda$ est la longueur d'onde de la lumière couplée dans le guide d'onde, et $\Delta\phi$ est l'angle maximal de la lumière déviée donné par :

$$\Delta\phi = 2 \times \cos^{-1}\left(\sqrt{\frac{(N+1)^2 \times (\tan\phi_K)^2}{(1-N)^2 + (N+1)^2 \times (\tan\phi_K)^2}}\right),$$

○ si $\frac{1}{2}\left(\cos^{-1}\left(\frac{N}{2 \times \sin \tan^{-1}N}\right) + \tan^{-1}N\right) < \phi_K \leq \frac{1}{2}\left(\cos^{-1}\left(\frac{N}{\sqrt{2}}\right) + 45°\right)$, $\Lambda_e =$

$M \times \lambda \times \sin\left(\phi_K - \frac{\Delta\phi}{2}\right)$, $\Delta\phi = \sin^{-1}(\sin(2 \times \phi_K) - N)$,

○ si $\frac{1}{2}\left(\cos^{-1}\left(\frac{N+2-N^2}{2 \times \sqrt{N+1}}\right) + \sin^{-1}\sqrt{\frac{3-N}{4}}\right) < \phi_K \leq \frac{1}{2}\left(\cos^{-1}\left(\frac{N}{2 \times \sin \tan^{-1}N}\right) + \tan^{-1}N\right)$,

$\Lambda_e = \frac{N \times M \times \lambda}{2 \times \cos\left(\phi_K - \frac{\Delta\phi}{2}\right)}$, et $\Delta\phi = 2 \times \tan^{-1}\left[\frac{\cos\phi_K - \sqrt{\Delta}}{2 \times (\alpha + \sin\phi_K)}\right]$, avec $\alpha = \frac{1-N^2}{8 \times \sin\phi_K}$ et $\Delta = (\cos\phi_K)^2 - 4 \times \alpha \times (\alpha + \sin\phi_K)$,

○ si $\phi_K \leq \frac{1}{2}\left(\cos^{-1}\left(\frac{N+2-N^2}{2 \times \sqrt{N+1}}\right) + \sin^{-1}\sqrt{\frac{3-N}{4}}\right)$, $\Lambda_e = \frac{N \times M \times \lambda}{\cos\left(\phi_K - \frac{\Delta\phi}{2}\right) + \sqrt{N^2 - \left(\sin\left(\phi_K - \frac{\Delta\phi}{2}\right)\right)^2}}$, et

$$\Delta\phi = 2 \times \cos^{-1}\left[\frac{\sqrt{1 + \cos(2 \times \phi_K)}}{\sqrt{2} \times \cos(2 \times \phi_K)}\right].$$

FIG. 1

FIG. 2

FIG. 3

FIG. 4

FIG. 5

FIG. 6

FIG. 7

FIG. 8

FIG. 9

EP 4 091 014 B1

EP 4 091 014 B1

**FIG. 10**

FIG. 11B

FIG. 11A

**FIG. 11C**

**FIG. 11D**

FIG. 12

**FIG. 13**

**FIG. 14**

EP 4 091 014 B1

**FIG. 15**

EP 4 091 014 B1

**FIG. 16**

FIG. 17

FIG. 18

FIG. 21

FIG. 19

FIG. 20

**FIG. 22**

FIG. 23

EP 4 091 014 B1

**FIG. 24B**

2242
2243

0
30
60
90
120
150
180
210
240
270
300
330

10
20
30

**FIG. 24A**

2240
2241

0.4  0.3  0.2  0.1  0  -0.1  -0.2  -0.3  -0.4

-0.4  -0.3  -0.2  -0.1  0  0.1  0.2  0.3  0.4

EP 4 091 014 B1

**FIG. 24C**

**FIG. 24D**

**FIG. 25**

**FIG. 26**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20152557 A
- US 20090141501 A
- US 9733475 B